(19) Europäisches Patentamt
European Patent Office
Office européen des brevets

(11) **EP 2 339 377 B1**

(12) **FASCICULE DE BREVET EUROPEEN**

(45) Date de publication et mention
de la délivrance du brevet:
**06.06.2012 Bulletin 2012/23**

(51) Int Cl.:
**G01S 19/24** *(2010.01)* **G01S 19/43** *(2010.01)*

(21) Numéro de dépôt: **10190286.4**

(22) Date de dépôt: **05.11.2010**

(54) **Récepteur de positionnement par satellites**

Satellitengesteuerter Positionsempfänger

Satellite positioning receiver

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2009 FR 0906182**

(43) Date de publication de la demande:
**29.06.2011 Bulletin 2011/26**

(73) Titulaire: **Thales**
**92200 Neuilly Sur Seine (FR)**

(72) Inventeurs:
• **Chopard, Vincent**
**07300 Tournon sur Rhône (FR)**
• **Martin, Nicolas**
**26500 Bourg les Valence (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
FR-A1- 2 881 008 US-A- 5 983 160
US-B1- 6 516 021

• MATTHEW LASHLEY ET AL: "Performance Analysis of Vector Tracking Algorithms for Weak GPS Signals in High Dynamics", IEEE JOURNAL OF SELECTED TOPICS IN SIGNAL PROCESSING, IEEE, US, vol. 3, no. 4, 1 août 2009 (2009-08-01), pages 661-673, XP011264304, ISSN: 1932-4553
• M.G. PETOVELLO AND G. LACHAPELLE: "Comparison of Vector-Based Software Receiver Implementations with Application to Ultra-Tight GPS/INS Integration", ION GNSS19TH INTERNATIONAL TECHNICAL MEETING OF THESATELLITE DIVISION, 29 septembre 2006 (2006-09-29), pages 1790-1799, XP002592714, Fort Worth TX
• TOM FORD, JASON HAMILTON: "NovAtel Inc. New Positioning Filter: PhaseSmoothing in the Position Domain", ION GPS 2002, 27 septembre 2002 (2002-09-27), pages 1860-1862, XP002592715, Portland OR
• PANY T ET AL: "Use of a Vector Delay Lock Loop Receiver for GNSS Signal Power Analysis in Bad Signal Conditions", POSITION, LOCATION, AND NAVIGATION SYMPOSIUM, 2006 IEEE/ION CORONADO, CA APRIL 25-27, 2006, PISCATAWAY, NJ, USA,IEEE LNKD- DOI: 10.1109/PLANS.2006.1650689, 25 avril 2006 (2006-04-25), pages 893-903, XP010925015, ISBN: 978-0-7803-9454-4

**Description**

L'invention porte sur un récepteur de signaux d'un système de radionavigation par satellites destiné à calculer très précisément la position d'un porteur. Le système le plus connu, auquel on se référera dans la suite est le système GPS et on désignera les systèmes de radionavigation par satellites sous l'appellation générique GPS même si ce sont des systèmes voisins tels que Galileo ou Glonass.

Le système GPS utilise une constellation de satellites qui tournent autour de la terre sur des orbites très précisément déterminées, c'est à dire pour lesquels il est possible de connaître à tout instant la position. Les orbites des satellites sont choisies de sorte qu'à toute heure, 6 à 12 satellites soient visibles en tout point de la Terre. Chaque satellite émet deux signaux radioélectriques de fréquences $L_1$ (1575,42 MHz) et $L_2$ (1227,6 MHz). Au sol ou sur un véhicule terrestre, maritime ou aérien, un récepteur GPS reçoit les signaux émis par des satellites visibles.

Le récepteur GPS embarqué mesure la durée de propagation requise pour qu'une marque horaire transmise par un satellite lui parvienne. Les marques horaires sont codées sur des ondes porteuses par la technique de modulation de phase. Chaque satellite transmet ainsi un code pseudo-aléatoire qui lui est propre. Une réplique de la séquence du code est générée par le récepteur et le décalage que doit subir la réplique afin de coïncider avec le code reçu correspond à la durée de propagation du signal pour parcourir la distance satellite-récepteur. Cette durée multipliée par la vitesse de la lumière dans le milieu traversé donne une mesure de distance appelée pseudo-distance. A partir des mesures des pseudo-distances le séparant de chaque satellite visible, et de la connaissance de la position des satellites, le récepteur déduit sa position précise en latitude, longitude, et en altitude dans un repère terrestre par une résolution numérique voisine de la triangulation. Il peut également en déduire la date et l'heure précise dans le repère temporel du système GPS.

La référence de temps du récepteur, fournie par son horloge, ne coïncide pas parfaitement avec la référence de temps des satellites de la constellation, ce qui induit un biais dans les mesures de temps de propagation, donc de distance, égal au retard de la référence de temps du récepteur par rapport à la référence de temps des satellites. On emploie pour cela le terme de "pseudo-distance" Le biais de temps, commun à toutes les mesures, constitue une quatrième inconnue, outre les trois inconnues de position, ce qui oblige à disposer d'au moins quatre mesures pour calculer la position.

En outre, la position du récepteur est estimée en faisant un certain nombre d'approximations. La mesure de la pseudo-distance ne peut pas par exemple s'affranchir des erreurs liées au système telles que le manque de précision des éphémérides ou des horloges embarquées dans les satellites. La mesure de la pseudo-distance est également entachée d'erreurs liées aux interactions entre les signaux et les couches d'atmosphère qu'ils traversent. Le retard de propagation du signal dans la troposphère et l'ionosphère dépend de l'inclinaison du trajet et de l'heure à laquelle il a lieu. Typiquement les erreurs de positionnement du . GPS liées à l'atmosphère sont plus marquées de jour que de nuit et plus sensibles lorsqu'un satellite est proche de l'horizon qu'au zénith. Dans certaines applications comme l'approche de précision en aéronautique, la précision de positionnement obtenue par une mesure directe (ou absolue) de la pseudo-distance n'est pas suffisante.

L'utilisation d'une mesure différentielle permet d'améliorer sensiblement la précision du positionnement. Elle consiste à transmettre par un canal dédié (VHF, UHF ou téléphonie cellulaire) des corrections des mesures de pseudo-distance élaborées à partir de mesures de pseudo-distances provenant de récepteurs disposés dans des stations au sol et dont les positions sont connues très précisément et proches du récepteur embarqué. La mesure de la pseudo-distance séparant un récepteur au sol et un satellite est comparée à la distance théorique séparant ces deux dispositifs. La distance théorique est calculée à partir des coordonnées spatiales respectives du récepteur au sol et du satellite qui sont connues à tout instant. La différence entre la mesure de distance et la distance théorique représente l'erreur de mesure, elle est calculée pour chaque satellite à chaque époque d'observation. Ces différences de distance constituent des termes correctifs (aussi appelés corrections différentielles) qui sont retranchés aux mesures de pseudo-distance réalisées par le récepteur mobile. Ces corrections ont pour effet de supprimer pratiquement totalement les erreurs qui présentent une corrélation spatiale importante quelle que soit leur origine, système ou atmosphérique. Les corrections sont d'autant plus efficaces que les deux récepteurs sont proches. Toutefois, la mesure différentielle n'élimine pas les erreurs liées aux réflexions du signal sur des objets proches de l'antenne du récepteur, ni les erreurs propres au récepteur (bruit thermique). Ces erreurs sont présentes sur le récepteur de référence ainsi que sur le récepteur embarqué, elles dégradent la mesure de positionnement lors de la correction différentielle ; la précision obtenue est de l'ordre de quelques mètres.

Pour améliorer la précision du positionnement, les récepteurs au sol et les récepteurs mobiles, embarqués sur des porteurs, peuvent aussi tirer profit d'une seconde information élaborée par le récepteur qui est la mesure de la phase de la porteuse, pour chaque signal satellite reçu. La mesure de la phase instantanée de la porteuse reçue permet en effet de calculer une pseudo-distance, dite pseudo-distance de porteuse, entre le récepteur et le satellite, au même titre que la mesure de la phase instantanée du code pseudo-aléatoire. Cette pseudo-distance de porteuse subit les mêmes variations que la pseudo-distance de code, lorsque la distance entre le récepteur et le satellite ou le biais de temps dû à l'horloge du récepteur varient. Cette pseudo-distance mesurée par la phase est a priori ambiguë puisque la phase est connue modulo 2π mais elle est beaucoup moins bruitée que les mesures de pseudo-distance de code.

Une solution connue pour améliorer les mesures de pseudo-distance consiste à lisser la mesure de pseudo-distance bruitée réalisée sur le code par les mesures de phase peu bruitées. Pour cela le récepteur applique un filtre passe bans à la différence entre les mesures de pseudo-distance de code et de pseudo-distance de porteuse, puis ajoute cette différence filtrée à la mesure de pseudo-distance de porteuse pour reconstituer la mesure de phase de code. Ce traitement est réalisé axe satellite par axe satellite. Si la mesure est différentielle, un lissage identique est appliqué sur les récepteurs de la station sol afin que l'erreur de traînage du filtre passe bas, due à la divergence entre le code et la porteuse liée aux fluctuations du retard ionosphérique, soit identique au sol et sur le récepteur mobile, et ne perturbe pas la mesure de positionnement après de l'application de la correction.

Le principal intérêt de la méthode de lissage axe par axe tient dans sa simplicité et dans l'absence d'effet de couplage entre les mesures des pseudo-distances des différents satellites ou canaux, néanmoins elle n'est pas complètement satisfaisante. En effet, le gain sur la précision de la mesure est significatif uniquement lorsque le lissage est effectué avec une constante de temps longue ; et dans ce cas, la durée de réinitialisation pour récupérer la précision après une modification brusque de l'ensemble des mesures disponibles, est également longue, par exemple lors de la disparition d'un satellite par masquage, d'une panne d'un satellite ou encore d'une panne d'un récepteur au sol dans le cas du GPS différentiel. Il serait souhaitable d'éviter cet inconvénient.

Par ailleurs, pour quantifier l'intégrité de la mesure de position dans des applications où l'intégrité est critique, telles que les applications aéronautiques, on utilise un paramètre appelé "rayon de protection" de la mesure de position. Le rayon de protection correspond à une erreur de position maximale pour une probabilité donnée d'apparition d'erreur. C'est-à-dire que la probabilité que l'erreur de position dépasse le rayon de protection annoncé sans en être averti est inférieure à cette valeur de probabilité donnée. Le calcul se fonde sur deux types d'erreur qui sont d'une part les erreurs normales de mesure et d'autre part les erreurs causées par une anomalie de fonctionnement de la constellation de satellites, par une panne d'un satellite ou encore une panne d'un récepteur sol.

Communément, on distingue deux types d'événement redoutés pouvant survenir à un système de positionnement GPS : le premier, nommé non-continuité, correspond à une dégradation non prévue du service, mais déclarée ; le second, appelé non-intégrité, correspond à une mesure de position erronée mais non déclarée, dont l'apparence est celle d'une mesure fiable. Une non-continuité peut correspondre par exemple à l'apparition d'une alarme indiquant la présence supposée d'une panne. Dans les deux cas les conséquences peuvent être graves, d'où la nécessité de minimiser la probabilité de tels événements. Un calcul de rayon de protection peut être estimé pour une valeur de probabilité de non-continuité et une valeur de probabilité de non intégrité données a priori. Dans ce cas la probabilité que l'erreur de positionnement dépasse le rayon sera inférieure à la probabilité de non-intégrité donnée, et la probabilité d'alarme (justifiée ou non) sera inférieure à la probabilité de non-continuité donnée.

Par exemple, dans le cas des systèmes existants qui sont fondés sur le lissage axe par axe des mesures de position du code pseudo-aléatoire par les variations de phase de la porteuse, le rayon de protection se dégrade brutalement lors de la disparition d'un satellite et met longtemps à retrouver une valeur acceptable après réapparition du satellite, à cause du temps de réponse du filtre de lissage. Il serait souhaitable de trouver une solution qui évite cet inconvénient.

Le système décrit dans le brevet européen EP 1 839 070 pallie les inconvénients des solutions présentées ci-dessus. Il a pour but d'améliorer la précision de la mesure de position en utilisant d'une manière nouvelle les deux mesures simultanées de pseudo-distances mises à disposition par chaque satellite tout en conférant à la position ainsi obtenue une meilleure robustesse vis-à-vis des dégradations brutales de la géométrie des satellites (régime transitoire) qu'il est susceptible de rencontrer, et ceci pour le positionnement absolu comme pour le positionnement en différentiel.

Un tel système met en oeuvre une poursuite scalaire, qui consiste à poursuivre les satellites indépendamment les uns des autres. Dans cette configuration classique, pour synchroniser le code local et la porteuse locale sur le signal reçu du satellite, le récepteur utilise en parallèle deux dispositifs de poursuite : une boucle de code et une boucle de porteuse.

Le terme poursuite représente la capacité à se synchroniser avec les signaux satellites en utilisant par rétroaction les écarts de phase entre le signal récepteur et les signaux satellites.

La boucle de code sert à positionner un code local en phase avec le code contenu dans le signal reçu d'un satellite, de manière à réaliser une corrélation donnant le maximum d'énergie. La boucle de porteuse sert à asservir la fréquence ou la phase de la porteuse locale avec celle de la porteuse reçue, pour maximiser également le résultat de la corrélation.

La présence d'un signal en sortie de la corrélation ayant une amplitude importante, i.e. nettement supérieure à ce que donnerait le bruit ambiant en absence de signal satellite, signifie que le code local et la porteuse locale sont synchronisés sur le signal reçu, ce qui permet de mesurer à chaque instant la date d'émission du signal reçu, par l'intermédiaire de la phase du code local et de la phase de la porteuse locale.

La synchronisation initiale de la phase du code local et de la porteuse locale sur le signal reçu du satellite est réalisée dans une étape préliminaire dite d'acquisition. Cette étape n'est pas détaillée ici car elle sort du cadre du brevet, et est connue de l'homme de l'art. Elle consiste pour résumer en une recherche d'énergie par balayage d'un domaine d'incertitude en code et en Doppler jusqu'à ce que la corrélation donne un niveau de signal suffisant.

La boucle de code utilise au moins deux voies de corrélation, avec un code local en avance et un code local en retard par rapport au code de référence de la voie ponctuelle, et la même porteuse pour les trois voies. La boucle cherche à égaliser les niveaux en sortie des deux voies de corrélation par une rétroaction sur la phase du code local grâce à :

- un discriminateur de code qui mesure la différence d'énergie entre les deux voies,
- un correcteur de boucle qui filtre la sortie du discriminateur de code et produit une correction en vitesse, et
- un oscillateur à commande numérique ou NCO de code qui transforme la commande en vitesse en une phase de code local.

Lorsque les deux niveaux sont égaux le code de référence de la voie ponctuelle est en phase avec le code du satellite reçu, ce qui assure un maximum de rendement de la corrélation sur cette voie, hormis la perte due à l'effet Doppler.

Il existe deux types de boucle de porteuse : les boucles de fréquence et les boucles de phase de porteuse.

Une boucle de fréquence sert à faire coïncider la fréquence de la porteuse locale avec celle de la porteuse reçue, en premier lieu pour maximiser le signal recueilli après la corrélation et en second lieu pour fournir une mesure de Doppler sur le satellite poursuivi. Une boucle de phase sert à asservir la phase de la porteuse locale sur la phase de la porteuse reçue (modulo $2\pi$).

Une boucle de phase fournit une information beaucoup plus riche qu'une boucle de fréquence, car les évolutions de la phase de porteuse mesurée traduisent très précisément les évolutions des pseudo-distances, sans dérive, contrairement aux mesures d'une boucle de fréquence intégrée.

La poursuite scalaire s'oppose à la poursuite vectorielle qui à partir des mesures faites sur chaque signal en sortie des voies de corrélation estime directement la position et la vitesse du récepteur qui servent alors à fermer la boucle d'asservissement en alimentant les oscillateurs à commande numérique de la phase de porteuse et de la phase de code de chaque signal. Ainsi, la poursuite des satellites est faite de manière centralisée au niveau du calcul final de navigation apportant une meilleure robustesse au brouillage. Cela permet la poursuite des signaux à des niveaux d'interférences plus importants, surtout lorsque le module de calcul de navigation est couplé avec une centrale inertielle.

Il existe plusieurs types de poursuites vectorielles.

Dans "Fundamental of Signal Tracking Theory" (Spliker), la poursuite des signaux est faite par l'extension de la boucle de code scalaire nommée DLL (Delay Lock loop) en une boucle vectorielle. La boucle de porteuse est démodulée grâce à une aide en vitesse (poursuite en « Code Only ») On ne bénéficie donc pas de l'information de la mesure de la phase de porteuse. Dans l'architecture classique de navigation GPS couplée avec une centrale inertielle, la phase est pilotée depuis le module de calcul de navigation en cas de fort brouillage (configuration "code only "). C'est la boucle de code qui est indépendante et asservie satellite par satellite.

D'autres documents, tels " Comparison of Vector-Based Software receiver implementation with Application to Ultra-Tight GPS/INS Integration " (Petovello, Lachapelle), "Enhanced GPS receiver utilizing vector tracking, fast correlation processing and multiple signal characterization" (Heppe), et "Global positioning system and inertial measuring system unit ultra-tight coupling" (Abbott), utilisent le Doppler pour le calcul de navigation. L'asservissement de la porteuse se fait alors par le Doppler (par opposition à la phase).

L'invention a pour but de proposer une alternative améliorant la précision des résultats, en poursuite vectorielle.

L'invention se base sur des mesures de phase de porteuse en sortie du traitement du signal et sur l'asservissement vectoriel de cette même phase utilisant un filtre de Kalman, avec ou sans couplage inertiel. La mesure de phase est beaucoup plus précise que la mesure de Doppler et permet donc une navigation de meilleure qualité.

Selon un aspect de l'invention, il est proposé un récepteur de positionnement par satellites, comprenant des canaux de traitement, chacun associé à un satellite respectif parmi N satellites, un filtre Kalman étendu adapté pour effectuer une poursuite vectorielle pour l'ensemble des satellites utilisant des signaux reçus des N satellites, dans lequel :

- le filtre de Kalman étendu est adapté pour effectuer une propagation d'un vecteur d'état estimé comprenant ladite erreur de position, et pour mettre en oeuvre une équation de propagation matricielle faisant intervenir une matrice de propagation,
- chaque canal comprenant un oscillateur à commande numérique de phase de code, un oscillateur à commande numérique de phase de porteuse, un générateur de code, un générateur de phase, des corrélateurs avec intégrateurs, et des discriminateurs de phase et de code,

caractérisé en ce que ledit filtre de Kalman étendu est adapté pour effectuer un recalage à partir des erreurs de phase et de code reçues directement des discriminateurs de phase et de code, de chaque canal, et en ce que le récepteur comprend des premiers moyens de calcul des signaux de commande en code et en porteuse desdits oscillateurs à commande numérique de phase de code et de phase de porteuse, à partir de données fournies par ledit filtre de Kalman étendu, pour chaque canal.

Un tel récepteur fournit des mesures précises (grâce à la phase) à un niveau de robustesse au brouillage plus important qu'avec des boucles scalaires classiques. Cette invention s'applique de plus à tous les signaux GNSS et peut se décliner pour la poursuite en mono ou multi-fréquences et en mono ou multi-constellations.

Selon un mode de réalisation, le récepteur comprend des deuxièmes moyens de calcul optionnels d'une position estimée du récepteur dans un repère terrestre à partir d'une position précédemment calculée et d'une erreur sur cette position.

Ainsi la poursuite des signaux et le calcul de position sont effectués dans un même module par l'intermédiaire du filtre de Kalman et éventuellement de l'inertie.

Dans un mode de réalisation, ledit filtre de Kalman étendu est adapté pour délivrer en sortie, à destination desdits deuxièmes moyens de calcul, des corrections estimées de position et de vitesse du récepteur.

Selon un mode de réalisation, le récepteur comprend, en outre :

- des premiers moyens d'asservissement de la commande de phase de code en sortie de l'oscillateur à commande numérique de phase de code sur le signal de commande en entrée de l'oscillateur à commande numérique de phase de code délivré par lesdits premiers moyens de calcul ; et/ou
- des deuxièmes moyens d'asservissement de la commande de phase de porteuse en sortie de l'oscillateur à commande numérique de phase de porteuse sur le signal de commande en entrée de l'oscillateur à commande numérique de phase délivré par lesdits premiers moyens de calcul.

Ces asservissements permettent notamment de corriger les erreurs de troncatures des oscillateurs à commande numérique et ainsi évitent que la phase appliquée dérive de la phase commandée.

Lesdits premiers moyens de calcul peuvent être adaptés pour calculer lesdits signaux de commande en code et en porteuse par dérivation temporelle respective desdites pseudo-distances estimées de code et de phase délivrées par ledit filtre de Kalman étendu.

Ainsi la commande des oscillateurs à commande numérique est simplifiée.

Selon un mode de réalisation, lesdits premiers moyens de calcul sont adaptés pour calculer lesdits signaux de commande en code et en porteuse par développement limité respectif desdites pseudo-distances estimées de code et de phase délivrées par ledit filtre de Kalman étendu.

Ainsi la poursuite des signaux est simplifiée du fait que les pseudo-distances ne sont plus calculées et du fait que le calcul de position n'est plus nécessaire.

Dans un mode de réalisation, ledit filtre de Kalman étendu est adapté pour utiliser, dans ladite équation de propagation matricielle, le vecteur d'état comprenant une composante représentant l'ambigüité de la mesure de la pseudo-distance de porteuse de chaque satellite.

Selon un mode de réalisation, ledit filtre de Kalman étendu est adapté pour utiliser, dans ladite équation de propagation matricielle le vecteur d'état comprenant une composante représentant une erreur liée à la propagation du signal dans l'ïonosphère de chaque satellite.

Dans un mode de réalisation, ledit filtre de Kalman étendu est adapté pour utiliser, dans ladite équation de propagation matricielle le vecteur d'état comprenant une composante comprenant une erreur liée à la propagation du signal dans la troposphère pour chaque satellite.

Selon un mode de réalisation, chaque canal associé à un satellite comprend deux sous-canaux recevant de ce satellite des signaux de fréquences de porteuse différentes, chaque des sous-canal produisant des erreurs de phase et de code.

Ainsi l'estimation de l'erreur liée à la propagation du signal dans l'ïonosphère de chaque satellite est améliorée. La précision de la position calculée est donc meilleure. De plus, le récepteur est plus robuste au brouillage n'impactant qu'une seule fréquence.

Dans un mode de réalisation, le récepteur comprend, en outre, une centrale inertielle délivrant des données inertielles auxdits premiers moyens de calcul de commande, et/ou audit deuxième module de calcul de position et/ou audit filtre de Kalman étendu.

Ainsi le filtre de Kalman peut fonctionner à une fréquence nettement inférieure car la dérive de la centrale inertielle est faible, par exemple la fréquence du filtre de Kalman peut passer de 50 Hz à 1 Hz.

Selon un mode de réalisation, ledit filtre de Kalman étendu est, en outre, adapté pour délivrer des signaux correctifs à destination dudit filtre de Kalman étendu et de ladite centrale inertielle.

Dans un mode de réalisation, ledit filtre de Kalman étendu constitue un filtre principal fournissant une position calculée dans le repère terrestre à partir des erreurs de phase et de code reçues directement des discriminateurs de phase et de code des N satellites, comprenant, en outre, N filtres de Kalman auxiliaires de rang i, un filtre auxiliaire de rang i recevant les signaux des N satellites à l'exception du satellite de rang i.

Selon un mode de réalisation, le récepteur comprend, en outre, des troisièmes moyens de calcul d'un rayon de protection à partir des sorties desdits filtres de Kalman et des moyens de vérification que ce rayon de protection reste inférieur ou égal à un seuil.

L'invention sera mieux comprise à l'étude de quelques modes de réalisation décrits à titre d'exemples nullement limitatifs et illustrés par les dessins annexés sur lesquels :

- les figures 1 a et 1 b illustrent schématiquement un mode de réalisation d'un récepteur de positionnement par satellites selon un aspect de l'invention,
- la figure 2 illustre schématiquement un mode de réalisation du filtre de Kalman étendu du récepteur de la figure 1 a ou 1 b, selon un aspect de l'invention,
- la figure 3 illustre la propagation du calcul de position,
- les figures 4 et 5 illustrent deux modes de réalisation d'asservissements dans un récepteur de la figure 1 a ou 1 b selon un aspect de l'invention.
- la figure 6 illustre un mode de réalisation d'un récepteur selon la figure 1 a ou 1 b, par dérivation de l'état du filtre de Kalman FK,
- la figure 7 illustre schématiquement un mode de réalisation d'un récepteur de positionnement par satellites avec couplage inertiel en boucle ouverte,
- la figure 8 illustre schématiquement un mode de réalisation du filtre de Kalman étendu du récepteur de la figure 7, selon un aspect de l'invention,
- la figure 9 illustre schématiquement une variante de réalisation d'un récepteur selon la figure 7.
- la figure 10 illustre schématiquement un mode de réalisation d'un récepteur de positionnement par satellites avec couplage inertiel en boucle fermée,
- la figure 11 illustre schématiquement un mode de réalisation du filtre de Kalman étendu du récepteur de la figure 10, selon un aspect de l'invention,
- la figure 12, illustre un mode de réalisation d'un filtre auxiliaire d'amélioration de l'intégrité en cas d'absence de couplage inertiel,
- la figure 13 illustre schématiquement un mode de réalisation d'un récepteur de la figure 1a ou 1b avec calcul d'intégrité à boucles multidimensionnelles, sans couplage inertiel, selon un aspect de l'invention,
- la figure 14, illustre schématiquement un mode de réalisation d'un récepteur de la figure 7 avec calcul d'intégrité à boucles multidimensionnelles, avec couplage inertiel en boucle ouverte, selon un aspect de l'invention,
- la figure 15 illustre un mode de réalisation d'un filtre auxiliaire d'amélioration de l'intégrité en cas de couplage inertiel en boucle ouverte,
- la figure 16 illustre schématiquement un mode de réalisation d'un récepteur de la figure 10 avec calcul d'intégrité à boucles multidimensionnelles, avec couplage inertiel en boucle fermée, selon un aspect de l'invention,
- la figure 17 illustre un mode de réalisation d'un filtre auxiliaire d'amélioration de l'intégrité en cas de couplage inertiel en boucle fermée,
- la figure 18 illustre un mode de réalisation de positionnement de précision avec résolution d'ambigüité de phase RTK, selon un mode de réalisation,
- la figure 19 illustre un mode de réalisation de positionnement de précision avec positionnement différentiel avec corrections,

Dans la description qui suit, les éléments similaires portent des références identiques.

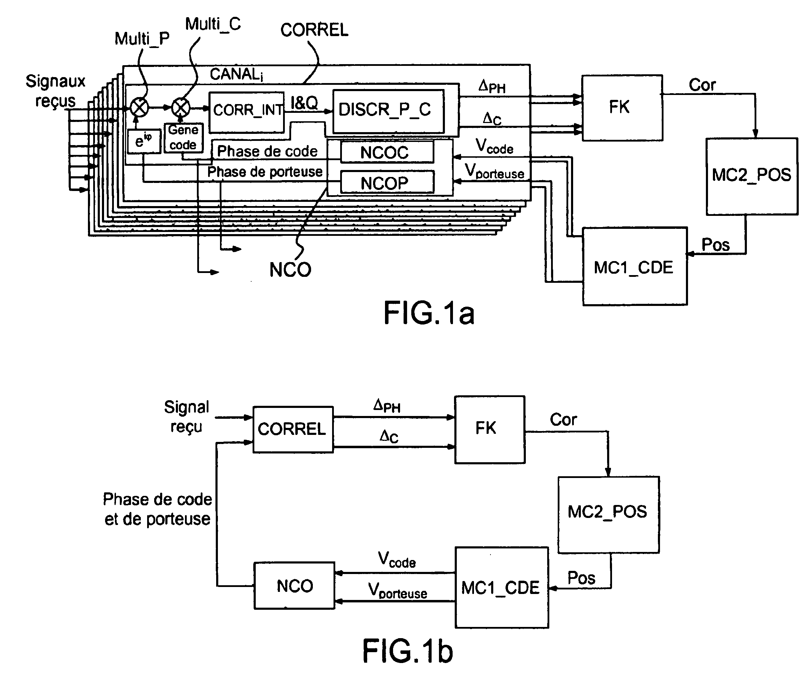

Sur la figure 1a, un récepteur de positionnement par satellites comprend des canaux de traitement $CANAL_i$, chacun associé à un satellite respectif parmi N satellites, un filtre Kalman étendu FK adapté pour effectuer une poursuite vectorielle, pour l'ensemble des satellites, des signaux reçus des N satellites. Le filtre de Kalman étendu FK est adapté pour effectuer une propagation d'un vecteur d'état estimé comprenant ladite erreur de position, et pour mettre en oeuvre une équation de propagation matricielle faisant intervenir une matrice de propagation.

Chaque canal $CANAL_i$ comprend un générateur de code Genecode, un générateur de phase $e^{i\varphi}$, des corrélateurs avec intégrateurs CORR_INT, des discriminateurs de phase et de code DISCR_P_C, un oscillateur à commande numérique de phase de code NCOC, et un oscillateur à commande numérique de phase de porteuse NCOP. L'ensemble formé par les deux oscillateurs à commande numérique de phase de code NCOC et de phase de porteuse NCOP est appelé bloc NCO, et l'ensemble formé par les discriminateurs de phase et de code DISCR_P_C, les corrélateurs avec intégrateurs CORR_INT, les générateurs de phase $e^{i\varphi}$ et de code Genecode et deux multiplicateurs respectifs MULT_P et MULT_C forment un bloc correlateur CORREL.

Le filtre de Kalman étendu FK est adapté pour effectuer un recalage à partir des erreurs de phase $\Delta_{PH}$ et de code $\Delta_C$ reçues directement des discriminateurs de phase et de code DISCR_P_C, de chaque canal $CANAL_i$, et pour produire une correction Cor à appliquer sur la position estimée. Le récepteur comprend un premier module de calcul MC1_CDE des signaux de commande en code V$_{code}$ et en porteuse V$_{porteuse}$ desdits oscillateurs à commande numérique de phase de code NCOC et de phase de porteuse NCOP, à partir de données Pos fournies par un deuxième module de calcul, pour chaque canal CANAL$_i$. Le premier module de calcul MC2_POS d'une position estimée Pos du récepteur dans un repère terrestre à partir d'une position précédemment calculée et d'une erreur sur cette position Cor.

Le signal local en avance, retard et ponctuel est généré par le générateur de code Genecode, qui génère le code d'étalement à partir d'une phase de code en sortie de l'oscillateur à commande numérique de phase de code NCOC, et par le générateur de phase $e^{i\varphi}$, qui génère la porteuse à partir d'une phase de porteuse en sortie de de l'oscillateur à commande numérique de phase de porteuse NCOP.

L'oscillateur à commande numérique de code NCOC calcule la phase de code (assimilable à un temps) en intégrant la commande de vitesse de la pseudo-distance code (V$_{code}$) et la vitesse du code (valeur fixe qui n'est pas représentée sur la figure). De même, l'oscillateur à commande numérique de phase de porteuse NCOP calcule la phase de porteuse (assimilable à un temps) en intégrant la commande de vitesse de la pseudo-distance phase (V$_{porteuse}$) et la fréquence centrale de la porteuse (valeur fixe non représentée sur la figure 1 a)

Le signal local est ensuite corrélé avec le signal reçu. Le signal obtenu est alors intégré et filtré dans les corrélateurs avec intégrateurs CORR_INT. Il y a au moins quatre voies de corrélation qui correspondent à la voie ponctuelle en phase Ip, la voie ponctuelle en quadrature Qp, les voies avance et retard ou la voie delta en phase Idelta et les voies avance et retard ou la voie delta en quadrature Qdelta. Ces signaux résultant sont transmis en entrée des discriminateurs de code et de phase DISCR_P_C. Le discriminateur de code fournit l'erreur $\Delta_c$ entre la phase de code en sortie du bloc NCO et la phase de code reçue. Le discriminateur de phase de porteuse fournit l'erreur $\Delta_{PH}$ entre la phase de porteuse en sortie du bloc NCO et la phase de porteuse reçue. Le discriminateur de code peut être par exemple un discriminateur "produit scalaire" ($\Delta_c$=Ip.Idelta+Qp.Qdelta) et le discriminateur peut être un discriminateur "arctangente" ($\Delta_{PH}$ =arctangente(Qp/Ip)).

En sortie des discriminateurs DISCR_P_C, les mesures d'erreurs de phase de porteuse et de phase de code sont transmises au filtre de Kalman étendu FK qui va calculer les corrections de position et de vitesse Cor. Les données Cor sont des corrections estimées de position et de vitesse du récepteur. Le deuxième module de calcul MC2_POS calcule la position et la vitesse du porteur, ou, en d'autres termes du récepteur, grâce à ces corrections et une position et vitesse estimée pouvant provenir des position et vitesse calculées à l'instant précédent ou d'une centrale inertielle.

Le premier module de calcul MC1_CDE permet alors de calculer les commandes, i.e. les vitesses de la pseudo-distance de phase et de code envoyées au bloc NCO.

Aussi, la figure 1b représente un récepteur selon la figure 1 a de manière simplifiée.

Dans un récepteur selon la figure 1 a ou 1 b, le filtre de Kalman étendu FK fonctionne à une cadence, par exemple de l'ordre de 50 Hz.

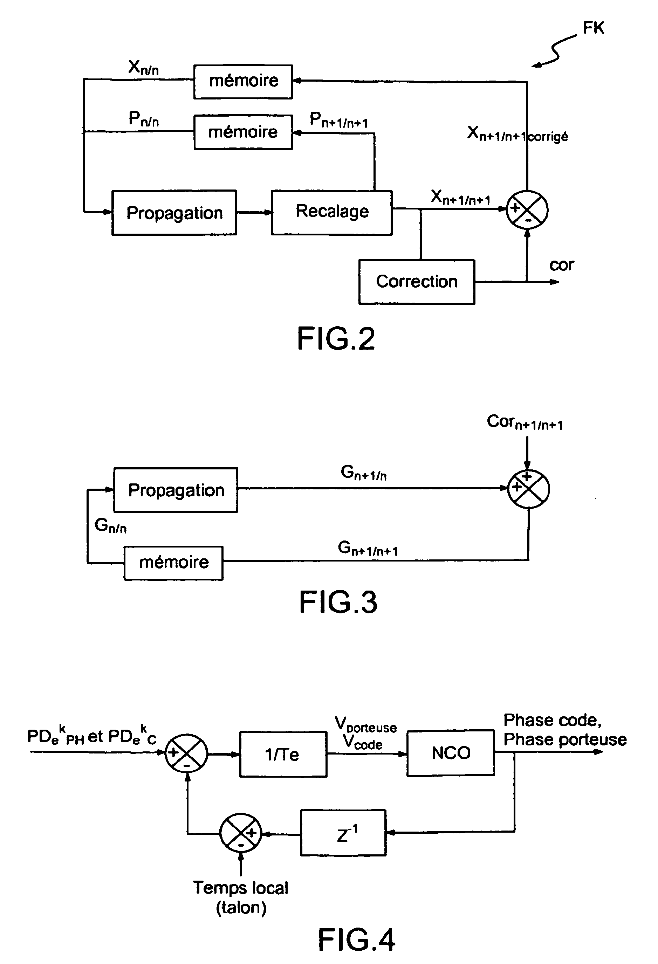

La figure 2 illustre un mode de réalisation d'un filtre de Kalman étendu pour un récepteur selon la figure 1 a ou 1 b.

On rappelle ce qui suit pour un filtre de Kalman.

L'équation d'état d'un filtre de Kalman est donnée par la formule suivante :

$$X_{k+1} = F_k X_k + v_k$$

Les états modélisant les erreurs d'un système de radionavigation par satellites ou GNSS ("Global Navigation Satellite System" en langue anglaise") se répartissent en différentes sous-catégories :

- l'erreur de position du récepteur (3 états),
- l'erreur de vitesse du récepteur (3 états),
- le biais d'horloge du récepteur (2 états : biais et dérive),
- l'erreur ionosphérique (2 états par satellite : biais et dérive),
- le calage de la phase porteuse (1 état par satellite en mono-fréquence et 2 états par satellite en bi-fréquence),
- les erreurs résiduelles (2 états par satellite : biais et dérive)

Il est ainsi possible d'écrire :

$$X = \begin{pmatrix} X_{dyn} \\ X_{GNSS} \end{pmatrix}$$

dans lequel :

$$X_{dyn} = \begin{pmatrix} \dot{X}_{Position} \\ X_{Vitesse} \end{pmatrix}$$

$X_{Position}$ représentant l'erreur de position, et
$X_{Vitesse}$ représentant l'erreur de vitesse.

$$X_{Vitesse} = \begin{pmatrix} \delta V_x \\ \delta V_y \\ \delta V_z \end{pmatrix}$$

dans lequel:

$\delta V_x$, $\delta V_y$, $\delta V_z$ représentent les erreurs de vitesse selon les axes du repère géométrique.

$$X_{Position} = \begin{pmatrix} \delta x \\ \delta y \\ \delta z \end{pmatrix}$$

dans lequel:

$\delta x$, $\delta y$, $\delta z$ : représentent les erreurs de position selon les axes du repère géométrique.

$$X_{GNSS} = \begin{pmatrix} X_{horloge} \\ X_{iono} \\ X_{calage} \\ X_{erreurs\ residuelles} \end{pmatrix}$$

dans lequel :

$$X_{horloge} = \begin{pmatrix} Biais_{horloge} \\ Derive_{horloge} \end{pmatrix}$$

BiaiS$_{horloge}$, Derive$_{horloge}$ représentant respectivement le biais et la dérive d'horloge du récepteur,
$X_{iono}$ représentant le biais et la dérive de l'erreur ionosphérique pour chaque satellite :

$$X_{iono} = \begin{pmatrix} X_{iono}^{sat\ 1} \\ \vdots \\ X_{iono}^{sat\ N} \end{pmatrix}$$

avec

$$X_{iono}^{sat\ k} = \begin{pmatrix} Biais_{iono}^{sat\ k} \\ Derive_{iono}^{sat\ k} \end{pmatrix}$$

$X_{erreurs}$ residuelles représente le biais et la dérive des erreurs résiduelles pour chaque satellite :

$$X_{erreurs\ residuelles} = \begin{pmatrix} X_{err}^{sat\ 1} \\ \vdots \\ X_{err}^{sat\ N} \end{pmatrix}$$

avec

$$X_{err}^{sat\ k} = \begin{pmatrix} Biais_{err}^{sat\ k} \\ Derive_{err}^{sat\ k} \end{pmatrix},$$

et

$X_{calage}$ représente le calage de la phase de porteuse pour chaque fréquence poursuivie de chaque satellite (2 états par satellite en bi-fréquence et 1 état par satellite en mono-fréquence) :
en mono-fréquence :

$$X_{calage} = \begin{pmatrix} b_{phase}^{sat\ 1} \\ \vdots \\ b_{phase}^{sat\ N} \end{pmatrix}$$

en bi-fréquence :

$$X_{calage} = \begin{pmatrix} X_{calage}^{L1} \\ X_{calage}^{L2} \end{pmatrix}$$

avec :

$$X_{calage}^{L1} = \begin{pmatrix} b_{phase}^{sat\ 1\ L1} \\ \vdots \\ b_{phase}^{sat\ N\ L1} \end{pmatrix}$$

et

$$X_{calage}{}^{L2} = \begin{pmatrix} b_{phase}^{sat\ 1\ L2} \\ \vdots \\ b_{phase}^{sat\ N\ L2} \end{pmatrix}$$

La matrice F (Fk) peut alors s'écrire :

$$F = \begin{pmatrix} F_{dyn} & 0 \\ 0 & F_{GNSS} \end{pmatrix}$$

dans laquelle :

$$F_{dyn} = \begin{pmatrix} I & Te \times I \\ O & I \end{pmatrix}, \quad I = \begin{pmatrix} 1 & 0 & 0 \\ 0 & 1 & 0 \\ 0 & 0 & 1 \end{pmatrix}, \text{ et } O = \begin{pmatrix} 0 & 0 & 0 \\ 0 & 0 & 0 \\ 0 & 0 & 0 \end{pmatrix},$$

Te étant la période entre deux étapes de propagations (correspond au temps entre deux mesures en sortie des discriminateurs) du filtre de Kalman.

$$F_{GNSS} = \begin{pmatrix} F_{horloge} & 0 & 0 & 0 \\ 0 & F_{iono} & 0 & 0 \\ 0 & 0 & F_{calage} & 0 \\ 0 & 0 & 0 & F_{erreurs\ résiduelles} \end{pmatrix},$$

$$F_{horloge} = \begin{pmatrix} 0 & 1 \\ 0 & 0 \end{pmatrix},$$

$F_{iono}$ est une matrice diagonale par blocs avec pour élément diagonaux

$$F_{iono}^{sat\ k} = \begin{pmatrix} 0 & 1 \\ -\omega_0^2 & -2\xi\omega_0 \end{pmatrix}$$

par satellite. Les valeurs $\omega_0$ et $\xi$ étant des paramètres représentatifs de l'évolution du délai de propagation ionosphérique.

$F_{calage}$ est la matrice identité de taille N en mono-fréquence et de taille 2N en bi-fréquence, et
$F_{erreursrtsiduelles}$ est une matrice diagonale par blocs avec pour éléments diagonaux

$$F_{err}^{sat\ k} = \begin{pmatrix} 0 & 1 \\ -\omega_1^2 & -2\xi_1\omega_1 \end{pmatrix}$$

par satellites. Les valeurs $\omega_1$ et $\xi_1$ étant des paramètres représentatifs de l'évolution des erreurs résiduelles.

L'équation d'observation du filtre de Kalman étendu est donnée par la formule suivante :

$$z_k = H_k \times X_k + w_k$$

Dans un cas mono-fréquence, on a :

$$Z_k = \begin{pmatrix} \Delta^k{}_{PH} \\ \Delta^k{}_C \end{pmatrix}$$

pour représenter :

$$Z_k = \begin{pmatrix} PD^k{}_{PH} - PD_{NCO}{}^k{}_{PH} \\ PD^k{}_C - PD_{NCO}{}^k{}_C \end{pmatrix} + w_k$$

$$H_k = \begin{bmatrix} H^k{}_{dyn} & H^k{}_{GNSS} \end{bmatrix}$$

avec

$$H_{dyn} = \begin{pmatrix} H_{pvt} \\ H_{pvt} \end{pmatrix} \begin{array}{l} \} \quad Porteuse \\ \} \quad Code \end{array}$$

$$H_{pvt} = \begin{bmatrix} \cos(\alpha_1) & \cos(\beta_1) & \cos(\gamma_1) & 1 \\ \vdots & \vdots & \vdots & \vdots \\ \cos(\alpha_m) & \cos(\beta_m) & \cos(\gamma_m) & 1 \end{bmatrix}_{m,4}$$

$$H_{GNSS} = \begin{pmatrix} H_{horloge} & H_{iono} & H_{calage} & H_{erreurs\ residuelles} \end{pmatrix}$$

$$H_{horloge} = \begin{pmatrix} -c & 0 \\ \vdots & \vdots \\ -c & 0 \end{pmatrix} \text{ de dimension 2Nx2}$$
$$\underbrace{\phantom{-c}}_{Biais\ d'horloge} \quad \underbrace{\phantom{0}}_{Dérive\ d'horloge}$$

dans laquelle c représente la célérité de la lumière dans l'espace.

$$H_{iono} = \begin{pmatrix} I_N & O_N \\ -I_N & O_N \end{pmatrix} \begin{array}{l} \} \quad Porteuse \\ \} \quad Code \end{array}$$

$$H_{calage} = \begin{pmatrix} I_N & O_N \\ O_N & O_N \end{pmatrix} \begin{matrix} \} & Porteuse \\ \} & Code \end{matrix}$$

$$H_{erreurs\ residuelles} = \begin{pmatrix} 1 & 0 \\ \vdots & \vdots \\ 1 & 0 \end{pmatrix} \begin{matrix} \\ \underbrace{\phantom{1}}_{Biais} & \underbrace{\phantom{0}}_{Dérive} \end{matrix}$$ de dimension 2Nx2

N représente le nombre de satellites,

$I_N$ représente la matrice identité de taille N,

ON représente la matrice nulle de taille NxN,

$w_k$ représente le bruit d'observation à l'instant k,

$\Delta^k_{PH}$ et $\Delta^k_c$ sont des vecteurs de dimension N de composantes les erreurs de phase de porteuse et de phase de code en sortie des discriminateurs mesurées sur tous les satellites poursuivis à l'instant k,

$PD^k_{PH}$ et $PD^k_c$ sont des vecteurs de dimension N de composantes les pseudo-distances vraies du code et de la porteuse de tous les satellites poursuivis à l'instant k,

$PD_{NCO}{}^k_{PH}$ et $PD_{NCO}{}^k_c$ sont des vecteurs de dimension N de composantes les pseudo-distances de code et de porteuse de tous les satellites poursuivis à l'instant k, cohérent des sorties du bloc NCO, et

$\cos(\alpha_i)$, $\cos(\beta_i)$, $\cos(\gamma_i)$ sont les cosinus directeurs de l'axe récepteur-satellite i (ou axes à vue) en repère géographique.

Dans un cas bi-fréquence L1, L2, on a :

$$Z_k = \begin{pmatrix} \Delta^k{}_{PH\ L1} \\ \Delta^k{}_{PH\ L2} \\ \Delta^k{}_{C\ L1} \\ \Delta^k{}_{C\ L2} \end{pmatrix}$$

pour représenter:

$$Z_k = \begin{pmatrix} PD^k{}_{PH\ L1} - PD_{NCO}{}^k{}_{PH\ L1} \\ PD^k{}_{PH\ L2} - PD_{NCO}{}^k{}_{PH\ L2} \\ PD^k{}_{C\ L1} - PD_{NCO}{}^k{}_{C\ L1} \\ PD^k{}_{C\ L2} - PD_{NCO}{}^k{}_{C\ L2} \end{pmatrix} + w_k$$

$$H_k = \begin{bmatrix} H^k{}_{dyn} & H^k{}_{GNSS} \end{bmatrix}$$

$$H_{dyn} = \begin{pmatrix} H_{pvt} \\ H_{pvt} \\ H_{pvt} \\ H_{pvt} \end{pmatrix} \begin{matrix} \} & Porteuse\ L1 \\ \} & Porteuse\ L2 \\ \} & Code\ L1 \\ \} & Code\ L2 \end{matrix}$$

$$H_{GNSS} = \begin{pmatrix} H_{horloge} & H_{iono} & H_{calage} & H_{erreurs\ residuelles} \end{pmatrix}$$

$$H_{horloge} = \begin{pmatrix} \underbrace{-c}_{Biais\ d'horloge} & \underbrace{0}_{D\acute{e}rive\ d'horloge} \\ \vdots & \vdots \\ -c & 0 \end{pmatrix} \quad \text{de dimension 4Nx2.}$$

$$H_{iono} = \begin{pmatrix} I_N & O_N \\ U_{iono} \times I_N & O_N \\ -I_N & O_N \\ \underbrace{-U_{iono} \times I_N}_{Biais\ iono} & \underbrace{O_N}_{D\acute{e}rive\ iono} \end{pmatrix} \begin{matrix} \} & Porteuse\ L1 \\ \} & Porteuse\ L2 \\ \} & Code\ L1 \\ \} & Code\ L2 \end{matrix}$$

$U_{iono} = (L1/L2)^2$ est le rapport ou ratio des deux fréquences au carré

$$H_{calage} = \begin{pmatrix} I_N & O_N \\ O_N & I_N \\ O_N & O_N \\ \underbrace{O_N}_{Calage\ L1} & \underbrace{O_N}_{Calage\ L2} \end{pmatrix} \begin{matrix} \} & Porteuse\ L1 \\ \} & Porteuse\ L2 \\ \} & Code\ L1 \\ \} & Code\ L2 \end{matrix}$$

$$H_{erreurs\ residuelles} = \begin{pmatrix} 1 & 0 \\ \vdots & \vdots \\ \underbrace{1}_{Biais} & \underbrace{0}_{D\acute{e}rive} \end{pmatrix} \quad \text{de dimension 4Nx2}$$

$\Delta^k_{PH\ L1}$, $\Delta^k_{CL1}$, $\Delta^k_{PH\ L2}$ et $\Delta^k_{C\ L2}$ sont les vecteurs de dimension N de composantes les erreurs de phase de porteuse et de phase de code pour L1 et L2 en sortie des discriminateurs, mesurées sur tous les satellites poursuivis à l'instant k.

$PD^k_{PH\ L1}$, $PD^k_{C\ L1}$, $PD^k_{PH\ L2}$ et $PD^k_{C\ L2}$ sont les vecteurs de dimension N de composantes les pseudo-distances vraies du code et de la porteuse sur L1 et L2 de tous les satellites poursuivis à l'instant k.

$PD_{NCO}{}^k_{PH\ L1}$, $PD_{NCO}{}^k_{C\ L1}$, $PD_{NCO}{}^k_{PH\ L2}$ et $PD_{NCO}{}^k_{C\ L2}$ sont les vecteurs de dimension N de composantes les pseudo-distances code et porteuse sur L1 et L2 de tous les satellites poursuivis à l'instant k cohérents des sortie du bloc NCO.

L'état X du filtre de Kalman contient l'erreur de position et l'erreur de vitesse du récepteur. L'estimation de cette erreur donnée après recalage du filtre de Kalman permet de calculer la correction Cor. La correction $cor_{n+1/n+1}$ appliquée à l'instant n+1 sur les position et vitesse estimées du calcul de position ($G_{n+1/n}$) par le deuxième module de calcul MC2_POS n'est pas forcément consécutive de $X_{n+1/n+1}$ à l'instant n+1; il peut avoir un délai entre l'estimation de l'erreur et l'application à la position estimée.

Au moment de l'application de la correction sur $G_{n+1/n}$, $X_{n+1/n+1}$ doit aussi être mis à jour par cette correction $Cor_{n+1/n+1}$. $X_{n+1/n+1}$ devient alors $X_{n+1/n+1}$ corrigé sur la figure 2.

Comme illustré sur la figure 3, la position Pos également nommée G, peut être propagée d'un instant à un autre par la fonction f :

$$G_{n+1/n} = f(G_{n/n}).$$

Nous allons maintenant décrire le premier module de calcul MC1_CDE des signaux de commande du bloc NCO.

Pour que le signal reste accroché, il faut que les pseudo-distances $PD_{NCO}^{k}{}_{PH}$ et $PD_{NCO}^{k}{}_{C}$ mesurées à partir des phases en sortie du bloc NCO soient les plus proches possible des pseudo-distances vraies $PD^{K}{}_{PH\,L1}$, $PD^{k}{}_{CL1}$. On cherche donc à avoir en sortie du bloc NCO les phases qui sont des vecteurs contenant les N phases reçues respectives des satellites.

Dans le cas mono-fréquence, on a :

$$PD_e^{k}{}_{PH} = d_k + C_{PH}\, H^{k}{}_{GNSS}\, X^{k/k-1}{}_{GNSS}$$

$$PD_e^{k}{}_{C} = d_k + C_{C}\, H^{k}{}_{GNSS}\, X^{k/k-1}{}_{GNSS}$$

$d_k$ étant le vecteur des distances euclidiennes entre la position des satellites dans le repère terrestre à l'instant k (donnée par les éphémérides) et la position estimée $G_{k/k \cdot 1}$ du récepteur dans le même repère au même instant t. On a :

$$C_{PH} = [I_N\ O_N]\ \text{et}\ C_C = [O_N\ I_N]$$

Dans le cas bi-fréquence, on a :

$$PD_e^{k}{}_{PH\,L1} = d_k + C_{PH\,L1}\, H^{k}{}_{GNSS}\, X^{k/k-1}{}_{GNSS}$$

$$PD_e^{k}{}_{PH\,L2} = d_k + C_{PH\,L2}\, H^{k}{}_{GNSS}\, X^{k/k-1}{}_{GNSS}$$

$$PD_e^{k}{}_{C\,L1} = d_k + C_{C\,L1}\, H^{k}{}_{GNSS}\, X^{k/k-1}{}_{GNSS}$$

$$PD_e^{k}{}_{C\,L2} = d_k + C_{C\,L2}\, H^{k}{}_{GNSS}\, X^{k/k-1}{}_{GNSS}$$

$$C_{PH\,L1} = [I_N\ O_N\ O_N\ O_N]\ ,\ C_{PH\,L2} = [O_N\ I_N\ O_N\ O_N]\ ,\ C_{C\,L1} = [O_N\ O_N\ I_N\ O_N]$$

et

$$C_{C\,L2} = [O_N\ O_N\ O_N\ I_N]$$

Le premier module de calcul MC1_CDE de commandes du bloc NCO peut effectuer une dérivation des pseudo-distances estimées.

Dans ce cas d'utilisation, les commandes $v_{code}$ et $V_{porteuse}$ envoyées au bloc NCO sont calculées en dérivant les pseudo-distances $PD_e^{k}{}_{PH}$ et $PD_e^{k}C$.

$$v_{code}^{k} = (PD_e^{k}{}_{C} \cdot PD_e^{k-1}{}_{C})\ /\ T_e\ \text{ et } v_{porteuse}^{k} = (PD_e^{k}{}_{PH} \cdot PD_e^{k-1}{}_{PH})\ /\ T_e$$

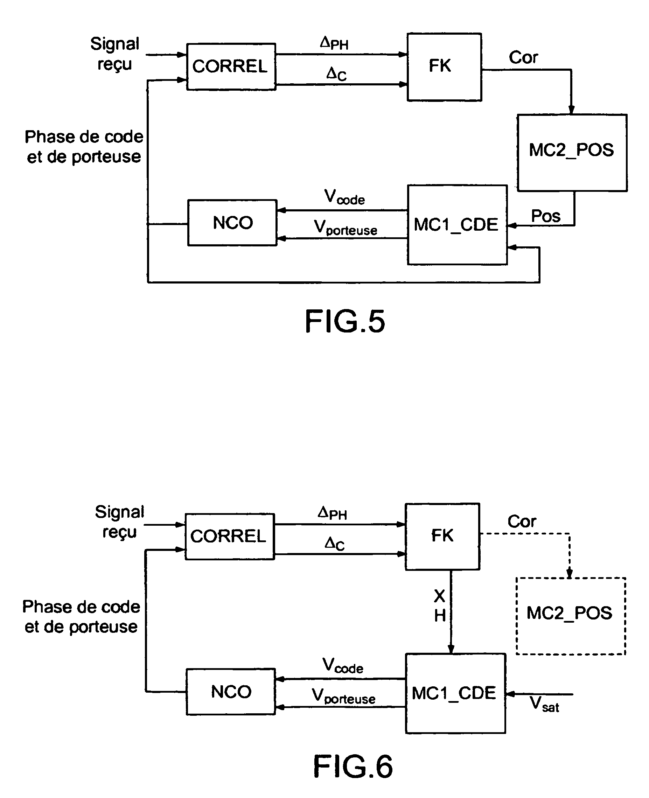

En variante, il est possible d'effectuer un asservissement des phases en sortie du bloc NCO sur les phases calculées à partir des pseudo-distances estimées comme illustré sur la figure 4 et 5.

Pour ne pas que la sortie du bloc NCO dérive à cause des troncatures numériques, il est possible de faire un asservissement des sorties $PD_{NCO}{}^k{}_{PH}$ et $PD_{NCO}{}^k{}_C$ des oscillateurs à commande numérique NCOC, NCOP sur les pseudo-distances estimées $PD_e{}^k{}_{PH}$ et $PD_e{}^k{}_C$, comme illustré sur la figure 5.

Dans une autre variante, les commandes du bloc NCO peuvent être déterminées, dans le premier module de calcul MC1_CDE de commande, par dérivation de l'état du filtre de Kalman FK.

En ce cas, il n'est pas utile de mettre en oeuvre un recalage sur la position G. Le filtre de Kalman ne sert alors qu'à l'asservissement des boucles de code et de porteuse, les états du filtre pouvant dévier des vraies valeurs du fait des erreurs de non-linéarité dans la formulation de H.

Les commandes $V_{code}$ et $v_{porteuse}$ envoyées aux oscillateurs à commande numérique NCOP et NCOC du bloc NCO sont alors calculées directement en utilisant les incréments des états par les relations suivantes :

$$v_{porteuse}{}^k = C_{PH} * ( H^k \frac{X^{k/k-1} - X^{k-1/k-2}}{Te} - H_{dyn} Vsat)$$

$$v_{code}{}^k = C_C * ( H^k \frac{X^{k/k-1} - X^{k-1/k-2}}{Te} - H_{dyn} Vsat)$$

Vsat étant le vecteur ayant pour composantes les vitesses des satellites dans le repère géographique. Un tel mode de réalisation est illustré sur la figure 6, pour lequel le deuxième module de calcul MC2_POS de position est alors optionnel.

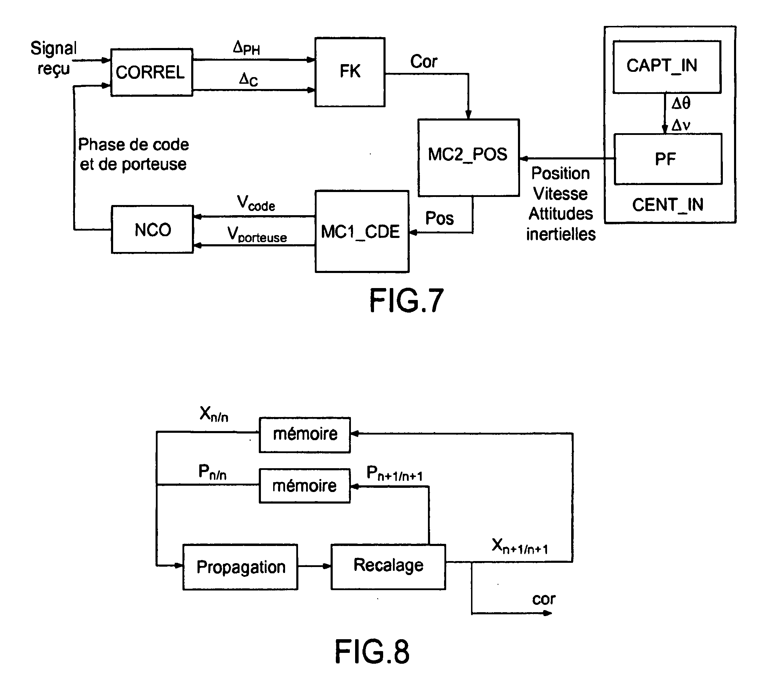

Sur la figure 7 est illustré un mode de réalisation d'un récepteur de positionnement par satellites avec couplage inertiel en boucle ouverte, comprenant, en sus des éléments du récepteur de la figure 1b, une centrale inertielle CENT_ IN, comprenant des capteurs inertiels CAPT_IN et une plate-forme inertielle PF.

Les capteurs inertiels CAPT_IN fournissent les incréments d'attitude et de vitesse à la plate-forme PF qui les intègre à partir d'un point d'initialisation. Les erreurs cumulées des capteurs inertiels CAPT_IN font diverger dans le temps les éléments (attitude, position, vitesse et accélération) fournis par la plate-forme PF au deuxième module de calcul MC2_POS de position. Le Filtre de Kalman FK calcule ces erreurs de la plate-forme inertielle PF grâce aux mesures de phase et de code en sortie des discriminateurs de chaque canal. Il fonctionne à une vitesse relativement basse, de l'ordre de 1 Hz pour réduire la charge de calcul.

En ce cas, le filtre de Kalman FK peut être réalisé comme illustré sur la figure 8. L'équation d'état du filtre de Kalman est alors donnée par la formule suivante :

$$X_{k+1} = F_k X_k + v_k$$

Les états modélisant les erreurs du système de radionavigation se répartissent en différentes sous-catégories :

- les erreurs d'attitudes inertielles suivant les axes Nord, Est et Vertical,
- les erreurs de vitesse inertielles dans les axes Nord, Est et Vertical,
- les erreurs de longitude, latitude et altitude inertielles,
- les erreurs de gyromètre suivant les axes x, y et z du porteur,
- les erreurs d'accéléromètres suivant les axes x, y et z du porteur,
- le biais d'horloge (2 états : biais et dérive),
- l'erreur ionosphérique (2 états par satellites: biais et dérive),
- le calage de phase (1 état par satellites), et
- les erreurs résiduelles (2 états par satellites: biais et dérive).

On peut donc écrire :

$$X = \begin{pmatrix} X_{INS} \\ X_{GNSS} \end{pmatrix}$$

dans lequel :

$$X_{INS} = \begin{pmatrix} X_{attitude} \\ X_{vitesse} \\ X_{position} \\ X_{gyrometres} \\ X_{accelerometres} \end{pmatrix}$$

$$X_{attitude} = \begin{pmatrix} \delta\varphi_N \\ \delta\varphi_E \\ \delta\varphi_V \end{pmatrix}$$

est un vecteur dont les composantes sont les erreurs d'attitudes inertielles suivant les axes Nord, Est et Vertical

$$X_{vitesse} = \begin{pmatrix} \delta V_N \\ \delta V_E \\ \delta V_V \end{pmatrix}$$

est un vecteur dont les composantes sont les erreurs de vitesse inertielles selon les axes Nord, Est et Vertical,

$$X_{position} = \begin{pmatrix} \delta L \\ \delta G \\ \delta h \end{pmatrix}$$

est un vecteur dont les composantes sont les erreurs de latitude, longitude et altitude inertielles,

$$X_{gyrometre} = \begin{pmatrix} \delta\omega_X \\ \delta\omega_Y \\ \delta\omega_Z \end{pmatrix}$$

est un vecteur dont les composantes sont les erreurs de gyromètres suivant les axes x, y et z du porteur,

$$X_{accelerometre} = \begin{pmatrix} \delta f_X \\ \delta f_Y \\ \delta f_Z \end{pmatrix}$$

est un vecteur dont les composantes sont les erreurs d'accéléromètres suivant les axes x, y et z du porteur, et $X_{GNSS}$ est défini précédemment

La matrice F qui est la matrice linéarisée au point de fonctionnement de la plate-forme inertielle PF s'écrit donc :

$$F = \begin{pmatrix} F_{INS} & 0 \\ 0 & F_{GNSS} \end{pmatrix}$$

dans laquelle :

$F_{INS}$ est la matrice 15x15 suivante, dont les six premières colonnes sont présentées, suivies des neuf dernières colonnes :

| | $X_{attitude}$ | | | $X_{vitesse}$ | | |
|---|---|---|---|---|---|---|
| $X_{attitude}$ | 1 | $-a_1$ | $v_N/(Rn+h)$ | 0 | $-1/(Re+h)$ | 0 |
| | $a_1$ | 1 | $a_2$ | $1/(Re+h)$ | 0 | 0 |
| | $-v_N/(Rn+h)$ | $-a_2$ | 1 | 0 | $\tan(L)/(Re+h)$ | 0 |
| $X_{vitesse}$ | 0 | $f_V$ | $-f_E$ | 1 | 0 | 0 |
| | $-f_V$ | 0 | $f_N$ | 0 | 1 | 0 |
| | $f_E$ | $-f_N$ | 0 | 0 | 0 | 1 |
| $X_{position}$ | 0 | 0 | 0 | $1/(Rn+h)$ | 0 | 0 |
| | 0 | 0 | 0 | 0 | $-1/(Re+h)\cos(L)$ | 0 |
| | 0 | 0 | 0 | 0 | 0 | -1 |
| $X_{gyrometre}$ | 0 | 0 | 0 | 0 | 0 | 0 |
| | 0 | 0 | 0 | 0 | 0 | 0 |
| | 0 | 0 | 0 | 0 | 0 | 0 |
| $X_{accelerometre}$ | 0 | 0 | 0 | 0 | 0 | 0 |
| | 0 | 0 | 0 | 0 | 0 | 0 |
| | 0 | 0 | 0 | 0 | 0 | 0 |

| $X_{position}$ | | | $X_{gyrometre}$ | | | $X_{accelerometre}$ | | |
|---|---|---|---|---|---|---|---|---|
| $\Omega_{\gamma} \sin(\Lambda)$ | 0 | 0 | | | | 0 | 0 | 0 |
| 0 | 0 | 0 | | B | | 0 | 0 | 0 |
| $a_3$ | 0 | 0 | | | | 0 | 0 | 0 |
| 0 | 0 | 0 | 0 | 0 | 0 | | | |
| 0 | 0 | 0 | 0 | 0 | 0 | | B | |
| $a_4$ | 0 | $-k_2$ | 0 | 0 | 0 | | | |
| 1 | 0 | 0 | 0 | 0 | 0 | 0 | 0 | 0 |
| $v_s \sin(L)/(Re+h)\cos2(L)$ | 1 | 0 | 0 | 0 | 0 | 0 | 0 | 0 |
| $-a_4/2$ | 0 | 1 | 0 | 0 | 0 | 0 | 0 | 0 |

(suite)

| X_position | | | X_gyrometre | | | X_accelerometre | | |
|---|---|---|---|---|---|---|---|---|
| 0 | 0 | 0 | 1 | 0 | 0 | 0 | 0 | 0 |
| 0 | 0 | 0 | 0 | 1 | 0 | 0 | 0 | 0 |
| 0 | 0 | 0 | 0 | 0 | 1 | 0 | 0 | 0 |
| 0 | 0 | 0 | 0 | 0 | 0 | 1 | 0 | 0 |
| 0 | 0 | 0 | 0 | 0 | 0 | 0 | 1 | 0 |
| 0 | 0 | 0 | 0 | 0 | 0 | 0 | 0 | 1 |

avec :

$$a_1 = \Omega_T \sin(L) + \frac{V_E}{R_E + h} \tan(L),$$

$$a_2 = \Omega_T \cos(L) + \frac{V_E}{R_E + h},$$

$$a_3 = \Omega_T \cos(L) + \left(1 + \tan^2(L)\right)\frac{V_E}{R_E + h},$$

$$a_4 = 2\Omega_T \sin(L)V_E,$$

L, G et h sont respectivement la latitude, la longitude et l'altitude hybrides i.e. après correction par le filtre de Kalman FK,
$V_N$, $V_E$ et $V_V$ sont respectivement les vitesses Nord, Est et Vertical hybride,
$f_N$, $f_E$ et $f_V$ sont respectivement les forces spécifiques Nord, Est et Vertical hybrides,
Re, Rn sont respectivement tes rayons de courbure Est et Nord de la Terre localement,
B est la matrice de passe du repère porteur (x,y,z) au Trièdre Géographique Local (Nord, Est, Vertical),
$\Omega s2_T$ est la vitesse de rotation de la Terre,
k2 = 3.1e-6 s$^{-1}$, et
$F_{GNSS}$ est défini précédemment.Le filtre de Kalman FK peut alors être défini par :

$$H_k = \left[ H^k{}_{INS} \quad H^k{}_{GNSS} \right]$$

$$H_{INS} = \left( 0_{q,6} \quad H_{dyn} \quad 0_{q,6} \right),$$

q = 2*N en mono-fréquence et 4*N in bi-fréquence

L'état X du filtre de Kalman FK contient l'erreur de position, l'erreur de vitesse et l'erreur d'attitude de la centrale inertielle CENT_IN. L'estimation de cette erreur donnée après recalage du filtre de Kalman FK permet de calculer la correction Cor.

Les corrections Cor sont directement appliquées à la position, la vitesse et l'attitude de la centrale inertielle pour obtenir la position, la vitesse et l'attitude corrigées.

De même que précédemment, le premier module de calcul MC1_CDE de commandes du bloc NCO peut effectuer une dérivation des pseudo-distances estimées, ou, en variante, effectuer un asservissement des pseudo-distances NCO sur les pseudo-distances estimées.

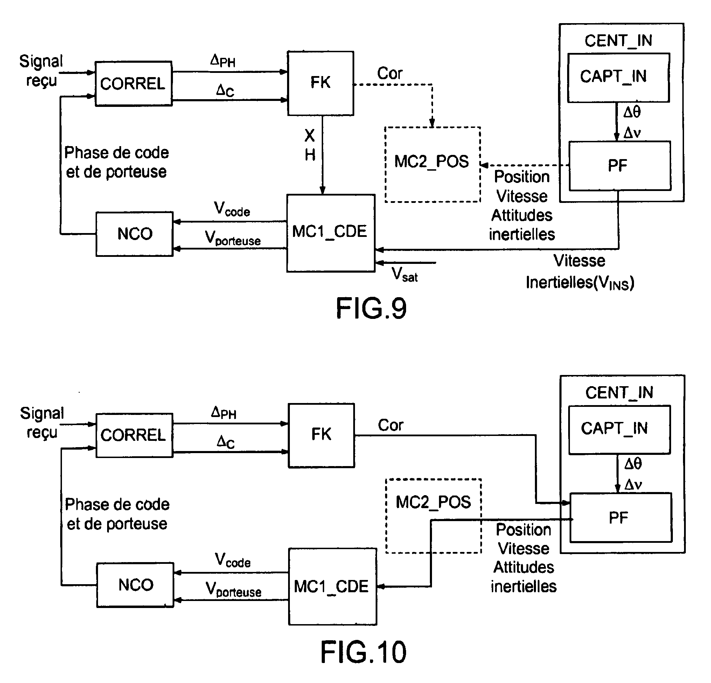

Dans une autre variante, illustrée sur la figure 9, les commandes du bloc NCO peuvent être déterminées, dans le premier module de calcul MC1_CDE de commande, par dérivation de l'état du filtre de Kalman FK et utilisation des aides inertielles en vitesse.

En ce cas, il n'est pas utile de mettre en oeuvre un recalage sur la position G. Le filtre de Kalman ne sert alors qu'à l'asservissement des boucles de code et de porteuse, les états du filtre pouvant dévier des vraies valeurs du fait des erreurs de non-linéarité dans la formulation de H.

Les commandes $v_{code}$ et $v_{porteuse}$ envoyées aux oscillateurs à commande numérique NCOP et NCOC du bloc NCO sont alors calculées directement en utilisant les incréments des états par les relations suivantes, dans lesquelles la partie de la pseudo-distance due à la dynamique du porteur est donnée par la centrale inertielle :

$$V_{code}^{k} = C_{C} * (H^{k} \frac{X^{k/k-1} - X^{k-1/k-2}}{Te} - H_{dyn} Vsat + H_{dyn} V_{INS})$$

$$V_{porteuse}^{k} = C_{PH} * (H^{k} \frac{X^{k/k-1} - X^{k-1/k-2}}{Te} - H_{dyn} Vsat + H_{dyn} V_{INS})$$

$V_{INS}$ étant la vitesse donnée par la plate-forme inertielle,
Le calcul de position n'est alors plus nécessaire, aussi le deuxième module de calcul MC2_POS est optionnel.

Sur la figure 10 est illustré un récepteur similaire à celui de la figure 9, mais avec un couplage inertiel en boucle fermée. La plate-forme inertielle PF est recalée à partir des erreurs ou corrections Cor délivrées par le Filtre de Kalman FK. Ceci permet de donner à la centrale inertielle CENT_IN un fonctionnement le plus linéaire possible. Le calcul de position n'est alors plus nécessaire, aussi le deuxième module de calcul MC2_POS est alors inutile.

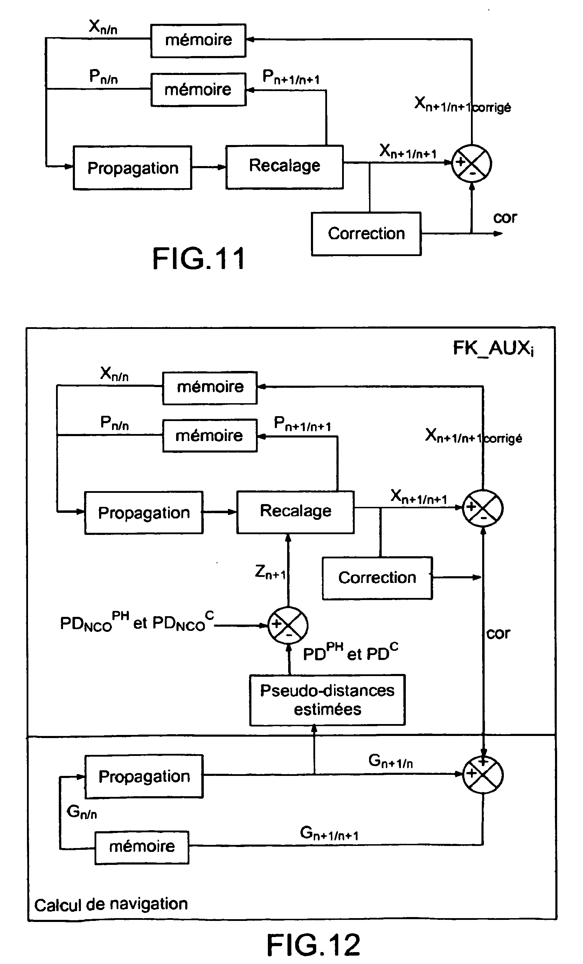

A chaque correction Cor reçue, la plate-forme PF met à jour ses états et donne la dynamique du porteur autour de son nouveau point de fonctionnement. Les états du Filtre de Kalman FK ne sont pas changés, comme illustré sur la figure 11.

Lorsque la correction Cor est appliquée à l'inertie, elle doit être appliquée aussi au filtre de Kalman FK :

la correction $cor_{n+1/n+1}$ appliquée à l'instant n+1 à la central inertielle n'est pas forcément consécutive de $X_{n+1/n+1}$ à l'instant n+1; il peut avoir un délai entre l'estimation de l'erreur et l'application. Au moment de l'application de la correction sur $G_{n+1/n}$, $X_{n+1/n+1}$ doit aussi être mis à jour par cette correction $Cor_{n+1/n+1}$. $X_{n+1/n+1}$ devient alors $X_{n+1/n+1}$ corrigé sur la figure 11.)
Le deuxième module de calcul MC2_POS de position est alors inutile.

Nous allons maintenant décrire le premier module de calcul MC1_CDE des signaux de commande du bloc NCO. Le premier module de calcul MC1_CDE de commandes du bloc NCO peut effectuer une dérivation des pseudo-distances estimées, ou un asservissement des phases NCO sur les pseudo-distances estimées, comme décrit précédemment.

En variante, le premier module de calcul MC1_CDE calcule les signaux de commande en code et en porteuse $V_{code}$ et $V_{porteuse}$ par dérivation de l'état du filtre de Kalman FK et aides inertielles en vitesse.
Les signaux de commande en code et en porteuse $V_{code}$ et $V_{porteuse}$ du bloc NCO sont calculés de manière similaire au cas par dérivation de l'état du filtre de Kalman FK.du mode de réalisation sans couplage inertiel, sauf que la partie de la pseudo-distance due à la dynamique du porteur est donnée par la centrale inertielle CENT_IN:

$$V_{code}^{k} = C_{C} * (H^{k} \frac{X^{k/k-1} - X^{k-1/k-2}}{Te} - H_{dyn} Vsat + H_{dyn} (P^{k}_{INS} - P^{k-1}_{INS}) / Te)$$

$$V_{porteuse}^{k} = C_{PH} * (H^{k} \frac{X^{k/k-1} - X^{k-1/k-2}}{Te} - H_{dyn} Vsat + H_{dyn} (P^{k}_{INS} - P^{k-1}_{INS}) / Te)$$

$P_{INs}$ est la position donnée par la plate-forme inertielle PF.

Dans ce cas, on ne peut plus utiliser la vitesse car il y a une incohérence entre la position et la vitesse inertielle à cause de la correction.

Comme vu précédemment, l'invention apporte des améliorations à la précision de la poursuite des signaux d'un système de positionnement par satellites tout en étant plus robuste aux interférences. L'invention apporte des améliorations à l'intégrité, ce qui est particulièrement important pour des applications mettant en jeu la sécurité de la vie des personnes.

Dans les trois configurations décrites précédemment du premier module de calcul MC1_CDE, l'invention permet de maintenir la poursuite du code et de la phase à des niveaux d'interférence plus élevés qu'avec des boucles de poursuite classiques. L'innovation présentée dans ce paragraphe consiste alors à utiliser les mesures de pseudo-distances en sortie du bloc NCO indépendamment du filtre de Kalman FK utilisé pour la poursuite. Ces mesures sont utilisées dans un calcul de position et de vitesse classique avec contrôle d'intégrité. Ceci peut être fait avec ou sans hybridation avec l'inertie, par moindre carrés ou par filtre de Kalman.

L'intégrité peut être améliorée en utilisant le filtre qui commande la poursuite des signaux comme filtre principal. Nous décrivons, dans le paragraphe suivant, le fonctionnement général de la méthode de maximum de séparation qui s'applique aux cas suivants. Dans ces derniers, est décrit la façon dont des filtres auxiliaires sont réalisés pour améliorer l'intégrité du récepteur.

Concernant le maximum de séparation, lorsqu'un bais apparaît sur la pseudo-distance d'un satellite, la position calculée par le récepteur est biaisée. Pour éviter de fournir une mauvaise position, il est alors nécessaire de fournir un contrôle d'intégrité.

Si n est le nombre total de satellites poursuivis par le filtre principal, lorsque la pseudo-distance d'un satellite est biaisée, parmi les n sous-ensembles de n-1 satellites au moins un ne continent pas la panne. La méthode de maximum de séparation consiste donc à créer n filtres de Kalman auxiliaires $FK\_AUX_i$ avec n-1 satellites et un filtre principal FK avec les n satellites.

La détection de la panne se fait en comparent la différence de position calculée entre les filtres auxiliaires $FK\_AUX_i$ et le filtre principal FK et un seuil. La représentation statistique de cette différence sans panne étant connue, le seuil de détection Th est alors choisi par rapport à une probabilité de fausse alarme.

La limite d'intégrité IL est la somme de l'erreur maximale atteignable avant détection entre un filtre auxiliaire $FK\_AUX_i$ et le filtre principal FK, correspondant au seuil de détection Th augmenté d'un terme en $k\sigma$ autour du filtre auxiliaire $FK\_AUX_i$, k étant un paramètre de confiance et $\sigma$ représentant la matrice de variance-covariance du sous filtre : $IL = Th + k\sigma$

La limite d'intégrité finale est le maximum des limites d'intégrité des filtres auxiliaires $FK\_AUX_i$.

En cas d'absence de couplage inertiel CENT_IN, les modèles d'état et d'observation des filtres auxiliaires $FK\_AUXi$ sont identiques à ceux du filtre principal FK, décrits précédemment en absence de couplage inertiel, mis à part que les signaux d'un des satellites ne sont pas utilisés. Ces filtres auxiliaires $FK\_AUXi$ ne participent pas à l'élaboration des commandes du bloc NCO et fonctionnent à une fréquence plus faible de ce fait.

Le recalage d'un filtre de Kalman auxiliaire $FK\_AUX_i$ se fait directement sur les pseudo-distances mesurées en sortie du bloc NCO :

$$Z_k = \begin{pmatrix} PD^k{}_{PH} - PD_{NCO}{}^k{}_{PH} \\ PD^k{}_C - PD_{NCO}{}^k{}_C \end{pmatrix} + w_k \qquad \text{ou} \qquad Z_k = \begin{pmatrix} PD^k{}_{PH\,L1} - PD_{NCO}{}^k{}_{PH\,L1} \\ PD^k{}_{PH\,L2} - PD_{NCO}{}^k{}_{PH\,L2} \\ PD^k{}_{C\,L1} - PD_{NCO}{}^k{}_{C\,L1} \\ PD^k{}_{C\,L2} - PD_{NCO}{}^k{}_{C\,L2} \end{pmatrix} + w_k$$

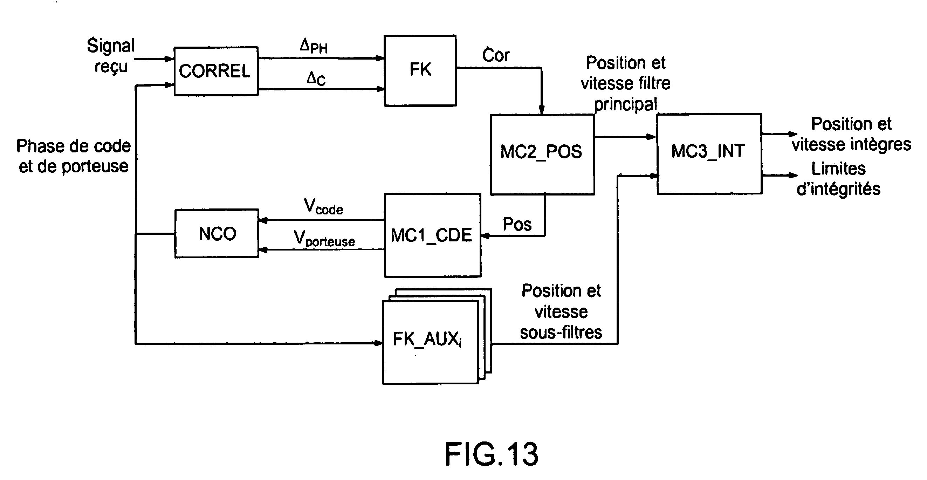

Avec $PD_{NCO}{}^{PH}$ et $PD_{NCO}{}^C$ pris en sortie du bloc NCO et $PD_{PH}$ et $PR_C$ les pseudo-distances estimées dans le filtre. Un exemple de réalisation d'un tel filtre de Kalman auxiliaire $FK\_AUX_i$ est illustré sur la figure 12, pour un récepteur selon l'invention à calcul d'intégrité avec boucles multidimensionnelles sans couplage inertiel tel qu'illustré sur la figure 13.

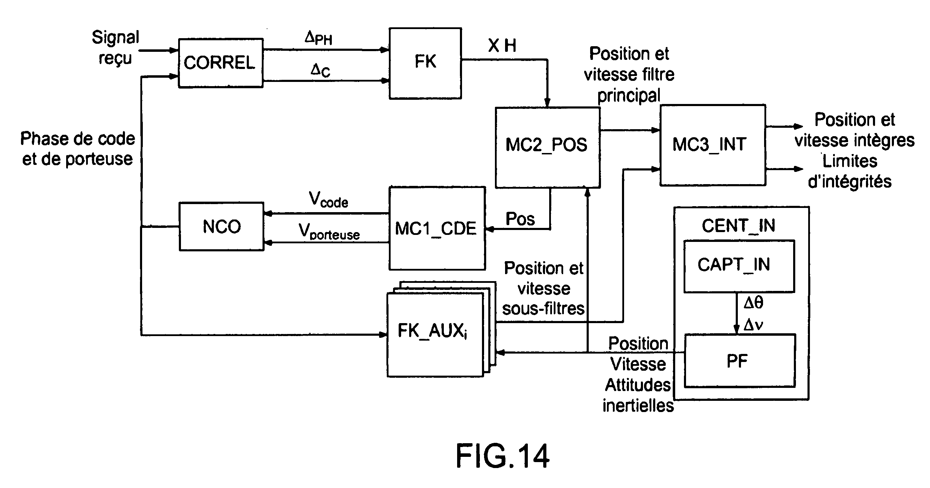

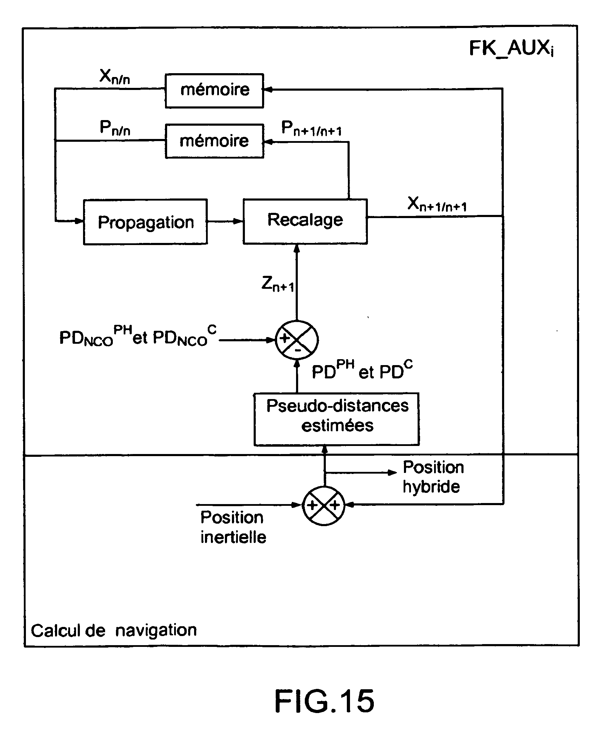

En cas de couplage inertiel en boucle ouverte, comme illustré sur la figure 14 les modèles d'état et d'observation des filtres de Kalman auxiliaires $FK\_AUX_i$, illustrés sur la figure 15 sont identiques au filtre de Kalman principal FK, décrits précédemment en présence de couplage inertiel, mis à part que les signaux d'un des satellites ne sont pas utilisés. Ces filtres auxiliaires $FK\_AUX_i$ ne participent pas à l'élaboration des commandes du bloc NCO. Le recalage d'un filtre auxiliaire $FK\_AUX_i$ se fait directement sur les pseudo-distances mesurées en sortie du bloc NCO :

$$Z_k = \begin{pmatrix} PD^k{}_{PH} - PD_{NCO}{}^k{}_{PH} \\ PD^k{}_{C} - PD_{NCO}{}^k{}_{C} \end{pmatrix} + w_k \qquad \textbf{ou} \qquad Z_k = \begin{pmatrix} PD^k{}_{PH\,L1} - PD_{NCO}{}^k{}_{PH\,L1} \\ PD^k{}_{PH\,L2} - PD_{NCO}{}^k{}_{PH\,L2} \\ PD^k{}_{C\,L1} - PD_{NCO}{}^k{}_{C\,L1} \\ PD^k{}_{C\,L2} - PD_{NCO}{}^k{}_{C\,L2} \end{pmatrix} + w_k$$

$PD_{NCO}{}^{PH}$ et $PD_{NCO}{}^{C}$ sont pris en sortie du bloc NCO et $PD_{PH}$ et $PD_{C}$ sont les pseudo-distances estimées dans le filtre auxiliaire FK_AUX$_i$.

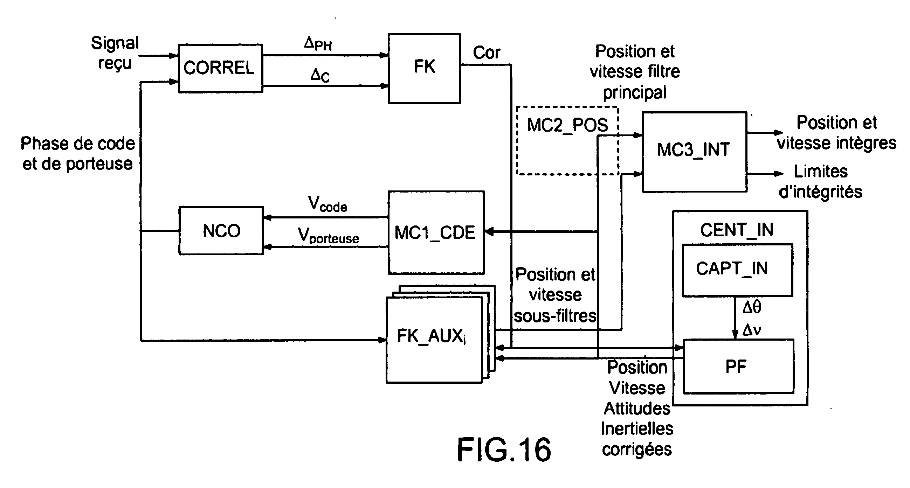

En cas de couplage inertiel en boucle fermée, tel qu'illustré sur la figure 16 la configuration est équivalente à la précédente si ce n'est que le filtre principal FK corrige la dérive inertielle. Les filtres auxiliaires FK_AUX$_i$ utilisent cette correction dans la propagation de leur état comme cela est décrit dans le brevet français n°05 12992 (Thalès) qui est analogue pour des boucles de traitement de signal GNSS scalaires. Le calcul de position n'est alors plus nécessaire, aussi le deuxième module de calcul MC2_POS est inutile.

Dans cette partie, nous nous intéressons aux améliorations que peut apporter l'invention à des applications nécessitant un positionnement de précision dans un environnement à interférences.

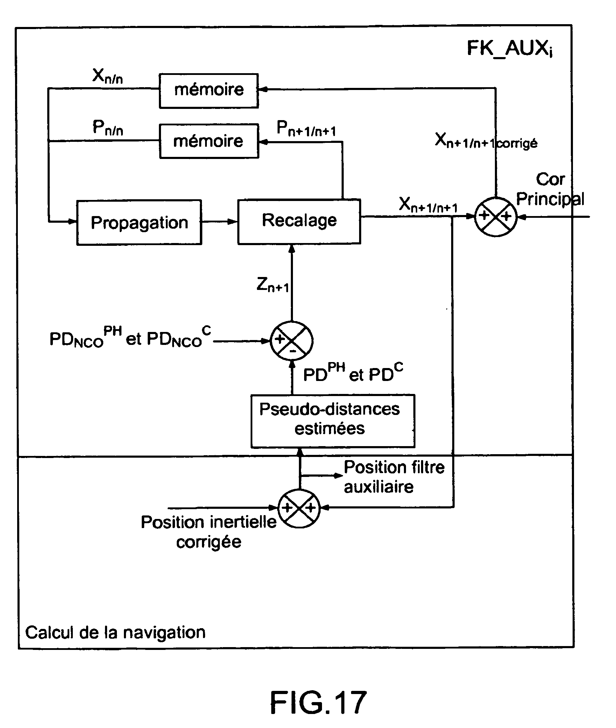

Dans cette configuration, comme illustrée sur la figure 17, la navigation est faite en relatif, par rapport à une balise qui envoie ses propres mesures de phase de porteuse datées. Le principe de résolution d'ambiguïté de phase ou RTK ("Real Time Kinematic" en langue anglaise) consiste à résoudre les ambiguïtés des doubles différences des mesures de phases pour un positionnement par rapport à la balise qui est très précis, de l'ordre du millimètre. Ce principe classique qui nécessite une mesure de phase précise n'est généralement pas utilisé dans des configurations de brouillage du fait de la faible robustesse de la boucle de phase dans un schéma de poursuite classique.

Grâce à la présente invention, la navigation de précision par résolution d'ambiguïté de phase RTK est étendue à des niveaux d'interférences importants. La balise et le récepteur mobile doivent tous deux utiliser l'invention présentée ici.

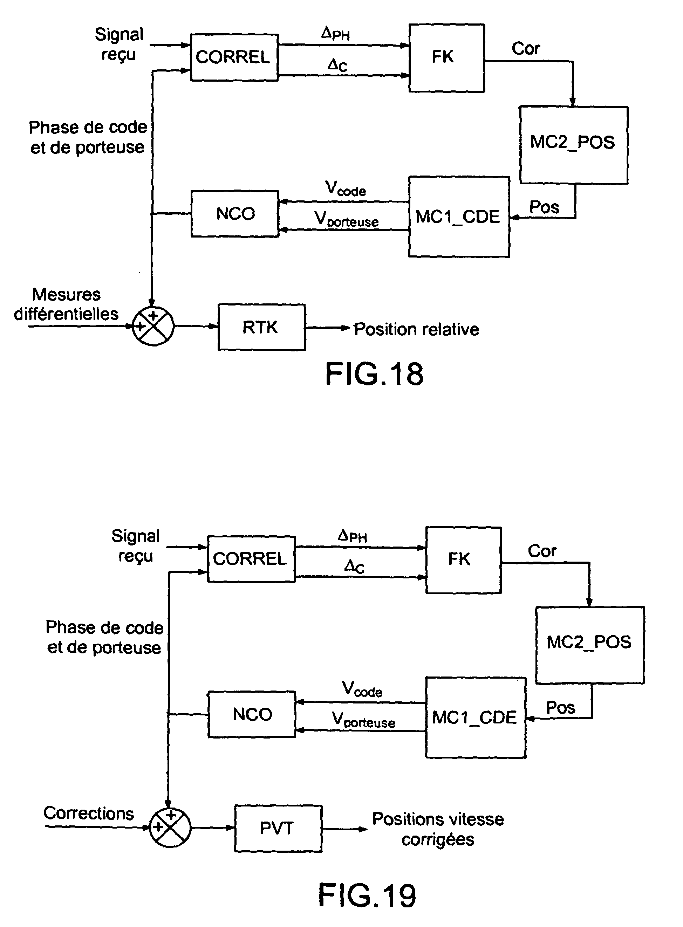

Il est également possible d'utiliser un positionnement différentiel avec corrections, comme illustré sur la figure 18, pour lequel, une balise locale envoie des messages de corrections à appliquer aux pseudo-distances satellites du récepteur pour améliorer la précision de la navigation. Ces corrections s'appliquent aux pseudo-distances de phase et de code dans la résolution du PVT (position vitesse temps).

Pour déterminer l'attitude d'un porteur, la combinaison des mesures de phases de deux récepteurs permet de déterminer par résolution d'ambiguïté la direction du vecteur joignant les antennes des récepteurs. Cette méthode est alors plus robuste aux interférences dès lors que les deux récepteurs sont équipés de la présente invention.

L'invention permet d'améliorer la précision du calcul de position et vitesse. En effet, du fait de la précision de la mesure de phase, le calcul de la position et de la vitesse est moins bruité et moins sensible au multi-trajet.

La précision du recalage de l'inertie permet l'identification des défauts de l'inerte de manière plus fine et aussi de manière plus rapide. En effet, pour des petits mouvements, une hybridation classique, contrairement à l'hybridation selon l'invention, n'est pas assez précise pour différencier la dynamique et le bruit naturel des mesures GNSS. Dès lors, lorsque le véhicule rentrera en virage, par exemple, la précision de la navigation sera maintenue pour le filtre de Kalman selon l'invention, alors que le filtre classique risque de diverger.

Grâce à la présente invention, les applications nécessitant la mesure de phase de porteuse ou étant améliorées par l'utilisation de la phase de porteuse sont alors possible avec des niveaux de brouillages beaucoup plus élevés. L'invention peut alors être mise en place pour des applications qui nécessitent un calcul de positionnement différentiel pour des approches de précision avec capacité d'atterrir par mauvais temps, sur terrain difficile (appontage, sur champ de bataille avec brouillage hostile...), de jour ou de nuit, et qui doit être rapidement déployable et mobile pour des applications militaires, civiles et multinationales, mais aussi le positionnement différentiel de type résolution d'ambiguïté de la phase RTK ou le calcul d'attitude qui nécessite la résolution de l'ambiguïté de la phase de porteuse entre deux récepteurs.

La précision de la mesure améliore automatiquement l'intégrité de la solution de navigation.

## Revendications

1.   Récepteur de positionnement par satellites, comprenant des canaux de traitement (CANAL$_i$), chacun associé à un satellite respectif parmi N satellites, un filtre Kalman (FK) étendu adapté pour effectuer une poursuite vectorielle pour l'ensemble des satellites utilisant des signaux reçus des N satellites, dans lequel :

le filtre de Kalman étendu (FK) est adapté pour effectuer une propagation d'un vecteur d'état estimé comprenant une erreur de position, et pour mettre en oeuvre une équation de propagation matricielle faisant intervenir une matrice de propagation,

chaque canal (CANAL$_i$) comprenant, un générateur de code (Genecode), un générateur de phase ($e^{i\varphi}$), des corrélateurs avec intégrateurs (CORR_INT), des discriminateurs de phase et de code (DISCR_P_C), un oscillateur à commande numérique de phase de code (NCOC), et un oscillateur à commande numérique de phrase de porteuse (NCOP),

**caractérisé en ce que** ledit filtre de Kalman étendu (FK) est adapté pour effectuer un recalage à partir des erreurs de phase ($\Delta_{PH}$) et de code ($\Delta c$) reçues directement des discriminateurs de phase et de code (DISCR_P_C), de chaque canal (CANAL$_i$), et **en ce que** le récepteur comprend des premiers moyens de calcul (MC1_CDE) des signaux de commande en code et en porteuse desdits oscillateurs à commande numérique de phase de code et de phase de porteuse (NCOC, NCOP), à partir de données fournies par ledit filtre de Kalman étendu (FK), pour chaque canal (CANAL$_i$).

**2.** Récepteur selon la revendication 1, comprenant, en outre, des deuxièmes moyens de calcul optionnels (MC2_POS) d'une position estimée du récepteur dans un repère terrestre à partir d'une position précédemment calculée et d'une erreur sur cette position.

**3.** Récepteur selon la revendication 2, dans lequel ledit filtre de Kalman étendu (FK) est adapté pour délivrer en sortie, à destination desdits deuxièmes moyens de calcul (MC2_POS), des corrections estimées de position et de vitesse du récepteur.

**4.** Récepteur selon l'une des revendications précédentes, comprenant, en outre:

- des premiers moyens d'asservissement de la commande de phase de code en sortie de l'oscillateur à commande numérique de phase de code (NCOC) sur le signal de commande en entrée de l'oscillateur à commande numérique de phase de code (NCOC) délivré par lesdits premiers moyens de calcul (MC1_CDE); et/ou
- des deuxièmes moyens d'asservissement de la commande de phase de porteuse (NCOP) en sortie de l'oscillateur à commande numérique de phase de porteuse (NCOP) sur le signal de commande en entrée de l'oscillateur à commande numérique de phase de porteuse délivré par lesdits premiers moyens de calcul (MC1_CDE).

**5.** Récepteur selon l'une des revendications 1 à 4, dans lequel lesdits premiers moyens de calcul (MC1_CDE) sont adaptés pour calculer lesdits signaux de commande en code et en porteuse par dérivation temporelle respective desdites pseudo-distances estimées de code et de phase délivrées par ledit filtre de Kalman étendu (FK).

**6.** Récepteur selon l'une des revendications 1 à 4, dans lequel lesdits premiers moyens de calcul (MC1_CDE) sont adaptés pour calculer lesdits signaux de commande en code et en porteuse par développement limité respectif desdites pseudo-distances estimées de code et de phase délivrées par ledit filtre de Kalman étendu (FK).

**7.** Récepteur selon l'une des revendications précédentes, dans lequel ledit filtre de Kalman étendu (FK) est adapté pour utiliser, dans ladite équation de propagation matricielle, le vecteur d'état comprenant une composante représentant l'ambigüité de la mesure de la pseudo-distance de porteuse de chaque satellite.

**8.** Récepteur selon l'une des revendications précédentes, dans ledit filtre de Karman étendu (FK) est adapté pour utiliser, dans ladite équation de propagation matricielle le vecteur d'état comprenant une composante représentant une erreur liée à la propagation du signal dans l'ïonosphère de chaque satellite.

**9.** Récepteur selon l'une des revendications précédentes, dans lequel ledit filtre de Kalman étendu (FK) est adapté pour utiliser, dans ladite équation de propagation matricielle le vecteur d'état comprenant une composante comprenant une erreur liée à la propagation du signal dans la troposphère pour chaque satellite.

**10.** Récepteur selon l'une des revendications précédentes, dans lequel chaque canal (CANAL$_i$) associé à un satellite comprend deux sous-canaux recevant de ce satellite des signaux de fréquences de porteuse différentes, chaque sous-canal produisant des erreurs de phase et de code.

**11.** Récepteur selon l'une des revendications précédentes, comprenant, en outre, une centrale inertielle (CENT_IN) délivrant des données inertielles auxdits premiers moyens de calcul (MC1_CDE) de commande, et/ou audit deuxième module de calcul (MC2_POS) de position et/ou audit filtre de Kalman étendu (FK).

**12.** Récepteur selon la revendication 11, dans lequel, ledit filtre de Kalman étendu (FK) est, en outre, adapté pour délivrer des signaux correctifs à destination dudit filtre de Kalman étendu (FK) et de ladite centrale inertielle (CENT_ IN).

**13.** Récepteur selon l'une des revendications précédentes, dans lequel, ledit filtre de Kalman étendu (FK) constitue un filtre principal fournissant une position calculée dans le repère terrestre à partir des erreurs de phase et de code reçues directement des discriminateurs de phase et de code (DISCR_P_C) des N satellites, comprenant, en outre, N filtres de Kalman auxiliaires de rang i (FK_AUX$_i$), un filtre auxiliaire de rang i recevant les signaux des N satellites à l'exception du satellite de rang i.

**14.** Récepteur selon la revendication 13, comprenant, en outre, des troisièmes moyens de calcul (MC3_INT) d'un rayon de protection à partir des sorties desdits filtres de Kalman et des moyens de vérification que ce rayon de protection reste inférieur ou égal à un seuil.

**Claims**

**1.** A satellite positioning receiver, comprising processing channels (CANAL$_i$) each associated with a respective satellite from N satellites, an extended Kalman filter (FK) that is designed to perform vector tracking for the set of satellites using signals received from the N satellites, wherein:

the extended Kalman filter (FK) is designed to perform a propagation of an estimated state vector comprising a position error and to implement a matrix propagation equation involving a propagation matrix,
each channel (CANAL$_i$) comprising a code generator (Genecode), a phase generator (e$^{i\varphi}$), correlators with integrators (CORR_INT), phase and code discriminators (DISCR_P_C), a digitally code phase controlled oscillator (NCOC), and a digitally carrier phase controlled oscillator (NCOP),
**characterised in that** said extended Kalman filter (FK) is designed to perform a reset on the basis of the phase ($\Delta_{PH}$) and code ($\Delta c$) errors received directly from the phase and code discriminators (DISCR_P_C), of each channel (CANAL$_i$), and **in that** the receiver comprises first means for calculating (MC1_CDE) the code and carrier command signals of said digitally code phase and carrier phase controlled oscillators (NCOC, NCOP) on the basis of data supplied by said extended Kalman filter (FK), for each channel (CANAL$_i$).

**2.** The receiver according to claim 1, further comprising second means (MC2_POS) for optionally calculating an estimated position of the receiver in a terrestrial reference on the basis of a previously calculated position and an error in this position.

**3.** The receiver according to claim 2, wherein said extended Kalman filter (FK) is designed to provide as an output, destined for said second calculation means (MC2_POS), estimated corrections of the position and speed of the receiver.

**4.** The receiver according to any one of the preceding claims, further comprising:

- first means for controlling the code phase command at the output of the digitally code phase controlled oscillator (NCOC) on the command signal at the input of the digitally code phase controlled oscillator (NCOC) delivered by said first calculation means (MC1_CDE); and/or
- second means for controlling the carrier phase command (NCOP) at the output of the digitally carrier phase controlled oscillator (NCOP) on the command signal at the input of the digitally carrier phase controlled oscillator delivered by said first calculation means (MC1_CDE).

**5.** The receiver according to any one of claims 1 to 4, wherein said first calculation means (MC1_CDE) are designed to calculate said code and carrier command signals by respective time derivation of said estimated pseudo-distances of code and of phase delivered by said extended Kalman filter (FK).

**6.** The receiver according to any one of claims 1 to 4, wherein said first calculation means (MC1_CDE) are designed to calculate said code and carrier command signals by respective limited development of said estimated pseudo-distances of code and of phase delivered by said extended Kalman filter (FK).

**7.** The receiver according to any one of the preceding claims, wherein said extended Kalman filter (FK) is designed to use, in said matrix propagation equation, the state vector that comprises a component that represents the ambiguity of the measurement of the carrier pseudo-distance of each satellite.

8. The receiver according to any one of the preceding claims, wherein said extended Kalman filter (FK) is designed to use, in said matrix propagation equation, the state vector that comprises a component that represents the error associated with the propagation of the signal in the ionosphere of each satellite.

9. The receiver according to any one of the preceding claims, wherein said extended Kalman filter (FK) is designed to use, in said matrix propagation equation, the state vector that comprises a component that comprises an error associated with the propagation of the signal in the troposphere for each satellite.

10. The receiver according to any one of the preceding claims, wherein each channel (CANAL$_i$) that is associated with a satellite comprises two sub-channels receiving from this satellite frequency signals from different carriers, each sub-channel producing phase and code errors.

11. The receiver according to any one of the preceding claims, further comprising an inertial unit (CENT_IN) delivering inertial data to said first command calculation means (MC1_CDE) and/or to said second module (MC2_POS) for calculating the position and/or to said extended Kalman filter (FK).

12. The receiver according to claim 11, wherein said extended Kalman filter (FK) is further designed to deliver corrective signals to said extended Kalman filter (FK) and to said inertial unit (CENT_IN).

13. The receiver according to any one of the preceding claims, wherein said extended Kalman filter (FK) constitutes a main filter providing a calculated position in the terrestrial reference on the basis of the phase and code errors received directly from the phase and code discriminators (DISCR_P_C) of the N satellites, further comprising N auxiliary Kalman filters of rank i (FK_AUX$_i$), an auxiliary filter of rank i receiving the signals from N satellites with the exception of the satellite of rank i.

14. The receiver according to claim 13, further comprising third means (MC3_INT) for calculating a protection radius on the basis of the outputs of said Kalman filters and means for verifying that this protection radius remains less than or equal to a threshold.

**Patentansprüche**

1. Satellitenpositionierungsempfänger, der Verarbeitungskanäle (CANAL$_i$) umfasst, die jeweils mit einem jeweiligen Satelliten aus N Satelliten assoziiert sind, ein erweitertes Kalman-Filter (FK), das zum Ausführen einer Vektorverfolgung für den Satellitensatz mittels von den N Satelliten empfangener Signale ausgelegt ist, wobei:

das erweiterte Kalman-Filter (FK) so ausgelegt ist, dass es eine Ausbreitung eines geschätzten Zustandsvektors bewirkt, der einen Positionsfehler enthält, und eine Matrixausbreitungsgleichung unter Beteiligung einer Ausbreitungsmatrix implementiert,
wobei jeder Kanal (CANAL$_i$) einen Code-Generator (Genecode), einen Phasengenerator ($e^{i\varphi}$), Korrelatoren mit Integratoren (CORR_INT), Phasen- und Code-Diskriminatoren (DISCR_P_C), einen digital Codephasen-gesteuerten Oszillator (NCOC) und einen digital Trägerphasen-gesteuerten Oszillator (NCOP) umfasst,
**dadurch gekennzeichnet, dass** das erweiterte Kalman-Filter (FK) zum Ausführen einer Rückstellung auf der Basis der Phasen-($\Delta_{PH}$)- und Code-($\Delta c$)-Fehler ausgelegt ist, die direkt von den Phasen- und Code-Diskriminatoren (DISCR_P_C) jedes Kanals (CANAL$_i$) empfangen wurden, und **dadurch**, dass der Empfänger erste Mittel zum Berechnen (MC1_CDE) der Code- und Trägersteuersignale der digital Codephasen- und Trägerphasen-gesteuerten Oszillatoren (NCOC, NCOP) auf der Basis von Daten umfasst, die von dem erweiterten Kalman-Filter (FK) für jeden Kanal (CANAL$_i$) zugeführt wurden.

2. Empfänger nach Anspruch 1, der ferner zweite Mittel (MC2_POS) zum optionalen Berechnen einer geschätzten Position des Empfängers in einer terrestrischen Referenz auf der Basis einer zuvor berechneten Position und eines Fehlers an dieser Position umfasst.

3. Empfänger nach Anspruch 2, wobei das erweiterte Kalman-Filter (FK) so ausgelegt ist, dass es als Ausgang, bestimmt für die zweiten Rechenmittel (MC2_POS), geschätzte Korrekturen der Position und Geschwindigkeit des Empfängers bereitstellt.

4. Empfänger nach einem der vorherigen Ansprüche, der ferner Folgendes umfasst:

- erste Mittel zum Regeln des Codephasenbefehls am Ausgang des digital Codephasen-gesteuerten Oszillators (NCOC) auf das Befehlssignal am Eingang des digital Codephasen-gesteuerten Oszillators (NCOC), der von den ersten Rechenmitteln (MC1_CDE) geliefert wird; und/oder
- zweite Mittel zum Regeln des Trägerphasenbefehls (NCOP) am Ausgang des digital Trägerphasen-gesteuerten Oszillators (NCOP) auf das Befehlssignal am Eingang des digital Trägerphasen-gesteuerten Oszillators, der von den ersten Rechenmitteln (MC1_CDE) geliefert wird.

5. Empfänger nach einem der Ansprüche 1 bis 4, wobei die ersten Rechenmittel (MC1_CDE) zum Berechnen der Code- und Trägerbefehlssignale durch jeweiliges zeitliches Ableiten der geschätzten Pseudodistanzen von Code und Phase ausgelegt sind, die von dem erweiterten Kalman-Filter (FK) geliefert werden.

6. Empfänger nach einem der Ansprüche 1 bis 4, wobei die ersten Rechenmittel (MC1_CDE) zum Berechnen der Code- und Trägerbefehlssignale durch jeweilige begrenzte Entwicklung der geschätzten Pseudoabstände von Code und Phase ausgelegt sind, die von dem erweiterten Kalman-Filter (FK) geliefert werden.

7. Empfänger nach einem der vorherigen Ansprüche, wobei das erweiterte Kalman-Filter (FK) so ausgelegt ist, dass es in der Matrixausbreitungsgleichung den Zustandsvektor benutzt, der eine Komponente beinhaltet, die die Ambiguität des Pseudoabstandsmesswertes des Trägers jedes Satelliten repräsentiert.

8. Empfänger nach einem der vorherigen Ansprüche, wobei das erweiterte Kalman-Filter (FK) so ausgelegt ist, dass es in der Matrixausbreitungsgleichung den Zustandsvektor benutzt, der eine Komponente enthält, die einen mit der Ausbreitung des Signals in der Ionosphäre jedes Satelliten assoziierten Fehler repräsentiert.

9. Empfänger nach einem der vorherigen Ansprüche, wobei das erweiterte Kalman-Filter (FK) so ausgelegt ist, dass es in der Matrixausbreitungsgleichung den Zustandsvektor benutzt, der eine Komponente enthält, die einen mit der Ausbreitung des Signals in der Troposphäre jedes Satelliten assoziierten Fehler repräsentiert.

10. Empfänger nach einem der vorherigen Ansprüche, wobei jeder mit einem Satelliten assoziierte Kanal (CANAL$_i$) zwei Subkanäle umfasst, die von diesem Satelliten Frequenzsignale von unterschiedlichen Trägern empfangen, wobei jeder Subkanal Phasen- und Codefehler erzeugt.

11. Empfänger nach einem der vorherigen Ansprüche, der ferner eine Trägheitseinheit (CENT_IN) umfasst, die Trägheitsdaten zu den ersten Befehlsrechenmitteln (MC1_CDE) und/oder zu dem zweiten Positionsberechnungsmodul (MC2_POS) und/oder zu dem erweiterten Kalman-Filter (FK) liefert.

12. Empfänger nach Anspruch 11, wobei das erweiterte Kalman-Filter (FK) ferner so ausgelegt ist, dass es Korrektursignale zu dem erweiterten Kalman-Filter (FK) und der Trägheitseinheit (CENT_IN) liefert.

13. Empfänger nach einem der vorherigen Ansprüche, wobei das erweiterte Kalman-Filter (FK) ein Hauptfilter bildet, das eine berechnete Position in der terrestrischen Referenz auf der Basis der Phasen- und Codefehler bereitstellt, die direkt von den Phasen-und Code-Diskriminatoren (DISCR_P_C) der N Satelliten empfangen werden, ferner umfassend N zusätzliche Kalman-Filter mit Rang i (FK_AUX$_i$), ein zusätzliches Filter mit Rang i, das die Signale von N Satelliten mit Ausnahme des Satelliten von Rang i empfängt.

14. Empfänger nach Anspruch 13, der ferner dritte Mittel (MC3_INT) zum Berechnen eines Schutzradius auf der Basis der Ausgänge der Kalman-Filter und Mittel zum Prüfen umfasst, dass dieser Schutzradius gleich oder kleiner als ein Schwellenwert bleibt.

FIG.1a

FIG.1b

26

EP 2 339 377 B1

FIG.2

FIG.3

FIG.4

Signal
reçu ───→ CORREL ──$\Delta_{PH}$──→ FK ──Cor──→

        ──$\Delta_C$──→

Phase de code
et de porteuse

                    MC2_POS

NCO ←──$V_{code}$── MC1_CDE ←──Pos──

    ←──$V_{porteuse}$──

# FIG.5

Signal
reçu ───→ CORREL ──$\Delta_{PH}$──→ FK ┄┄Cor┄┄→

        ──$\Delta_C$──→

Phase de code
et de porteuse

                    $\begin{matrix} X \\ H \end{matrix}$          MC2_POS

NCO ←──$V_{code}$── MC1_CDE ←──$V_{sat}$──

    ←──$V_{porteuse}$──

# FIG.6

28

FIG.7

FIG.8

FIG.9

FIG.10

FIG.11

FIG.12

FIG.13

EP 2 339 377 B1

Signal reçu → CORREL

$\Delta_{PH}$

$\Delta_C$

→ FK

X H

Phase de code et de porteuse

Position et vitesse filtre principal

MC2_POS

MC3_INT → Position et vitesse intègres / Limites d'intégrités

$V_{code}$

$V_{porteuse}$

NCO ← MC1_CDE

Pos

CENT_IN

CAPT_IN

$\Delta\theta$

$\Delta v$

Position et vitesse sous-filtres

FK_AUX$_i$

Position / Vitesse / Attitudes inertielles

PF

FIG.14

FIG.15

FIG.16

**FIG.17**

FIG.18

FIG.19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1839070 A

- FR 0512992, Thalès